# EUROPÄISCHE PATENTSCHRIFT

(11) **EP 2 603 537 B1**
(45) Veröffentlichungstag und Bekanntmachung des Hinweises auf die Patenterteilung: **28.11.2018**
(21) Anmeldenummer: 11748616.7
(22) Anmeldetag: 10.08.2011
(51) Int. Cl.: C08G 18/10

(54) **SELBSTSTRUKTURIERENDE OBERFLÄCHEN DURCH PDMS-PHASENTRENNUNGEN IN HARTEN POLYMERBESCHICHTUNGEN**
SELF-STRUCTURING SURFACES THROUGH PDMS PHASE SEPARATIONS IN HARD POLYMER COATINGS
SURFACES AUTOSTRUCTURANTES PAR SÉPARATIONS DE PHASES DE POLYDIMÉTHYLSILOXANES DANS DES REVÊTEMENTS POLYMÈRES DURS

(30) Priorität: 10.08.2010 DE 102010039169
(43) Veröffentlichungstag der Anmeldung: 19.06.2013
(73) Patentinhaber: Schwering & Hasse Elektrodraht GmbH, 32676 Lügde (DE)
(72) Erfinder: RESSEL, Jörg, 33098 Paderborn (DE); BREMSER, Wolfgang, 33100 Dahl (DE); REICHER, Johann, 31848 Bad Münder (DE); STENZEL, Volkmar, 27321 Thedinghausen (DE); BRINKMANN, Andreas, 45219 Essen (DE)
(74) Vertreter: Rohmann, Michael
(86) Internationale Anmeldenummer: PCT/EP2011/063797
(87) Internationale Veröffentlichungsnummer: WO 2012/020068

(56) Entgegenhaltungen:
- WO-A2-2006/086092
- WO-A2-2010/042804
- US-A- 3 632 440
- US-A- 4 693 936
- US-A1- 2003 215 650
- US-A1- 2008 213 599
- US-B1- 6 214 462
- ABDULLAH EKIN ET AL: "Synthesis, formulation, and characterization of siloxane-polyurethane coatings for underwater marine applications using combinatorial high-throughput experimentation", JOURNAL OF COATINGS TECHNOLOGY AND RESEARCH, Bd. 4, Nr. 4, 15. November 2007 (2007-11-15), Seiten 435-451, XP055009878, ISSN: 1547-0091, DOI: 10.1007/s11998-007-9039-7
- FANG J ET AL: "Fouling release nanostructured coatings based on PDMS-polyurea segmented copolymers", POLYMER, ELSEVIER SCIENCE PUBLISHERS B.V, GB, Bd. 51, Nr. 12, 28. Mai 2010 (2010-05-28), Seiten 2636-2642, XP027060689, ISSN: 0032-3861 [gefunden am 2010-05-21]
- FANG ET AL: "Microphase separation behavior on the surfaces of PEG-MDI-PDMS multiblock copolymer coatings", APPLIED SURFACE SCIENCE, ELSEVIER, AMSTERDAM, NL, Bd. 253, Nr. 5, 29. November 2006 (2006-11-29), Seiten 2978-2983, XP005782978, ISSN: 0169-4332, DOI: 10.1016/J.APSUSC.2006.06.044

## Beschreibung

Die vorliegende Erfindung betrifft Lacke zum Beschichten von Oberflächen, die ein Polymer enthalten, umfassend ein Basispolymer und Modifizierungseinheiten, die nach Aushärtung des Polymers mit dem Basispolymer unverträglich sind und zur Bildung von separaten Phasen an der Oberfläche führen, sowie Verfahren zu deren Herstellung. Die Lacke weisen einen geringen Reibungskoeffizienten und Reibungswiderstand auf.

Lacke werden in den unterschiedlichsten industriellen Bereichen zum Schutz von Oberflächen gegen externe Einflüsse wie z.B. Feuchtigkeit, physikalische Belastungen und Witterungseinflüsse verwendet. Weiterhin werden Lacke verwendet, um die Gleitfähigkeit von Oberflächen zu erhöhen. Eine gute Gleitfähigkeit eines Gegenstandes kann die Handhabung davon deutlich vereinfachen. Dies ist zum Beispiel bei der Beschichtung von Drähten wichtig, insbesondere bei deren Verwendung in elektrischen Bauteilen, wie beispielsweise Spulen. Um hohe Packungsdichten der Drähte in den Spulen zu erreichen, werden die elektrischen Leiter mit automatisierten Wickelmaschinen aufgewickelt. Weisen die elektrischen Leiter eine gute Gleitfähigkeit auf, kommt es zu weniger Fehllagen in der Spule und somit zu leistungsfähigeren Spulen.

Gute Gleitfähigkeit von Lacken ist auch bei der Beschichtungen von Fahrzeugen, z.B. Wasserfahrzeuge, insbesondere von Schiffen, wichtig. Eine gute Gleitfähigkeit in Wasser führt zu einem geringeren Treibstoffverbrauch. Solche Lackierungen müssen allerdings zusätzlich gute anti-Fouling- und anti-Haft-Eigenschaften aufweisen, damit sich keine Meeresorganismen an den Schiffskörper anlagern können, die wiederum zu einer verringerter Gleitfähigkeit führen können. Darüber hinaus muss ein Lack für die Beschichtung von Schiffskörpern umweltverträglich sein.

Um eine gute Gleitfähigkeit von Lacken zu erreichen wird herkömmlicherweise zunächst ein Lack auf Basis von selbstvernetzenden Polyestern und Polyesterimiden, Polyimiden und Polyamidimiden und Polyamiden und Polyestern, die mit verkappten Polyisocyanataddukten vernetzt werden, aufgetragen. Nach dem Auftragen der eigentlichen Lackschicht wird als äußere Schicht ein Gleitmittel aufgetragen. Als Gleitmittel werden natürliche Wachse, Montanwachse, Polyethylenwachse und Copolymere mit Propylenpolymeren aus höheren α-Olefinen, Polypropylenoxide, Ester aus höher funktionellen Polyolen und längerkettige Fettsäuren verwendet. Die Verwendung solcher Gleitmittel kann allerdings für verschiedene Anwendungen problematisch sein, da insbesondere Gleitmittel auf Basis von Kohlenwasserstoffen, Fettsäureestern und Polypropylenoxiden zum einen bei hohen Applikationstemperaturen von mehr als 450 °C nicht stabil sind und zum anderen umweltschutztechnisch bedenklich sind. Gleitmittel auf Basis von Paraffinwachs liegen gewöhnlich als Lösung in Testbenzin vor. Solche Gleitmittel sind jedoch aufgrund des verdampfenden Testbenzins aus Umweltschutzgründen sowie aus Gesundheitsschutzgründen problematisch.

In WO 2007/045575 wird ein Gleitmittel für Lackdrähte auf Basis einer Polytetrafluorethylen-Dispersion beschrieben, das verbesserte Reibungskoeffizienten aufweisen soll und umweltverträglich ist. Allerdings muss das Gleitmittel in einem separaten Prozessschritt auf den bereits lackierten Draht aufgetragen werden.

Ein weiterer Ansatz um Lacke mit guter Gleitfähigkeit bereitzustellen, besteht darin, dem Lack ein Gleitmittel einzumischen. Einen solchen Lack beschreibt z.B. EP 0 823 120, worin der Lack als internes Gleitmittel Polyethylenwachs enthält.

Bei einem weiteren Ansatz zur Verbesserung der Gleitfähigkeit von Lacken werden die im Lack enthaltenen Polymere mit Komponenten funktionalisiert. EP 0 033 224 und EP 0 072 178 beschreiben Elektroisolierlacke auf Basis von Polymeren, z.B. Polyamidimiden, die mit terminalen längerkettigen Alkylgruppen modifiziert sind.

Weiterhin sind Lacke bekannt, bei denen Polysiloxane in den Lack physikalisch eingemischt werden oder wobei die im Lack enthaltenen Polymere mit Polysiloxanen funktionalisiert werden. EP 1 176 611 beschreibt beispielsweise isolierte Drähte, die ein Polyamidimidharz aufweisen, das terminal mit Alkoxy- oder Aryloxy-Siloxanen, die eine Glycidether-Gruppe enthalten, modifiziert ist. EP 0 447 789 beschreibt Isolierlacke, die ein mit Polysiloxanen funktionalisiertes Copolymer enthalten. Es findet sich keine nähere Beschreibung des verwendeten Polysiloxanes. DE 20 00 638 (US 3,632,440) beschreibt ebenfalls ein Isoliermaterial, bei dem Polysiloxane einem Polymerharz zugemischt werden oder das Polymerharz durch Polysiloxane funktionalisiert wird. Eine Funktionalisierung des Polymerharzes mit lankettigen Polysiloxanen wird nicht gezeigt. US 2003/0215650 beschreibt die Modifikation von Polymerverbindungen mit kurzkettigen Polysiloxanen. Bei den oben genannten Lacken erzeugen die Komponenten jedoch keine selbststrukturierenden Oberflächen oder bewirken eine Phasenseparation der Lackkomponenten.

Eine Aufgabe der Erfindung ist es, einen Lack bereitzustellen, der sehr gute Gleitfähigkeit an der Oberfläche in Verbindung mit hoher chemischer und physikalischer Beständigkeit, insbesondere Temperaturbeständigkeit und Flexibilität, aufweist.

Diese Aufgabe wird erfindungsgemäß durch Bereitstellen eines Lacks zum Beschichten von Oberflächen gelöst, der ein funktionalisiertes Polymer enthält, umfassend ein Basispolymer und Modifizierungseinheiten, die nach Aushärten, insbesondere thermischem Aushärten, des Polymers mit dem Basispolymer unverträglich sind. Die Modifizierungseinheiten sind nach einer Aushärtung bzw. Filmbildung mit dem Basispolymer unverträglich, sodass eine Selbststrukturierung der Oberfläche erfolgt. Dabei wird eine vom Basispolymer separate Phase gebildet, die insbesondere an der äußeren Oberfläche des ausgehärteten Lackfilms vorliegt und die Gleitfähigkeitseigenschaften des Lackfilms verbessert. Die durch die Selbststrukturierung bzw. Phasenseparation entstehende Oberfläche kann u.a. auch zu Erzeugung von Mikroturbulenzen führen, die nach derzeitigem Kenntnisstand Strömungswiderstände in flüssigen Medien, z.B. bei Schiffskörpern verringern können.

Der Gegenstand der vorliegenden Erfindung ist in den Ansprüchen 1-14 definiert. Die hierin beschriebenen Ausführungsformen, die nicht durch die Ansprüche abgedeckt sind, dienen lediglich der Veranschaulichung des technischen Kontextes der vorliegenden Erfindung.

Die Erfindung kombiniert die vorteilhaften Eigenschaften eines Basispolymers, z.B. chemische Stabilität oder/und Härte, mit den vorteilhaften Eigenschaften der Modifizierungseinheiten, z.B. Haftverminderung oder/und Reibungsverminderung. Da die Modifizierungseinheiten chemisch fixiert und insbesondere kovalent an das Basispolymer gebunden sind, wird eine Abgabe der Modifizierungseinheiten an die Umgebung und insbesondere ein Ausbluten verhindert.
Der erfindungsgemäße Lack weist somit insbesondere eine Phasenseparation an der Oberfläche auf, also separate Bereiche an der Oberfläche gebildet aus Basispolymer, und andere separate Bereiche, gebildet aus Modifizierungseinheiten. Es wurde gefunden, dass der erfindungsgemäße ausgehärtete Lack eine strukturierte anisotropische Oberfläche bestehend aus polarer Matrix und nicht polaren separaten Bereichen aufweist. Es konnten auch Unterschiede in den mechanischen Eigenschaften festgestellt werden, nämlich insbesondere eine rigide polare Matrix, insbesondere eine rigide polare Basispolymermatrix und besonders bevorzugt eine rigide polare Polyamidimidmatrix und weiche, "flüssigkeitsartige" separate Bereiche, gebildet aus Modifizierungseinheiten, insbesondere Polysiloxanen und noch mehr bevorzugt aus PDMS-Phasen-Separationen.

Lacke liegen gewöhnlich als Dispersion oder kolloidale Lösung von Polymerpartikeln in einem Lösungsmittel vor. Die Polymerpartikel können z.B. in Form von kolloidalen Partikeln oder in Form von Gelpartikeln vorliegen. Gelpartikel können Modifizierungseinheiten an der Außenseite aufweisen, z.B. in bürstenartiger (Brush-) Struktur. Gegebenenfalls sind weitere Komponenten wie Additive vorhanden.
Die im erfindungsgemäßen Lack enthaltenen Polymere umfassen ein Basispolymer, das mit Modifizierungseinheiten funktionalisiert bzw. modifiziert ist. Die Basispolymere können z.B. aus der Gruppe bestehend aus Polyamidimiden, Polyesterimiden, Polyurethanen, Polyestern, Polyamiden, Polyimiden, Polyesteramidimiden, Polyepoxiden, Mischungen oder Kombinationen davon ausgewählt werden. In einer bevorzugten Ausführungsform ist das Basispolymer ein Polyamidimid, ein Polyesterimid oder/und ein Polyurethan, ganz bevorzugt ein Polyamidimid. Die Herstellung solcher Polymere ist bekannt.
Das Basispolymer kann in Abhängigkeit der gewünschten Verwendung gewählt werden. So werden beispielsweise zur Verwendung in Anti-Fouling- oder Fouling-Release-Anwendungen, insbesondere zur Lackierung von Schiffsrümpfen bevorzugt Polyurethane als Basispolymere eingesetzt. Bei der Verwendung in Elektroisolierlacken finden vorzugsweise Polyamidimide oder/und Polyesterimide Anwendung.
Die Polymere gemäß der vorliegenden Erfindung enthalten ein Basispolymer, das mindestens eine Modifizierungseinheit aufweist. Bei der Modifizierungseinheit handelt es sich um ein Polydialkylsiloxan und bevorzugt um ein Polydimethylsiloxan.Die Modifizierungseinheiten sind kovalent an das Basispolymer gekoppelt.
Die Lacke beinhalten neben dem Polymer auch Lösungsmittel, die im Folgenden beschrieben werden. Der Festkörperanteil des Polymers im Elektroisolierlack beträgt üblicherweise mindestens 10 %, mindestens 20 %, mindestens 25 %, mindestens 30 %, mindestens 35 % und bis zu 45 %, 50 %, 60 % oder 70 % (Masse/Masse). Als weitere Bestandteile kann der Elektroisolierlack Additive enthalten, die im Folgenden beschrieben sind.

Überraschenderweise wurde festgestellt, dass in dem ausgehärteten Lack, der durch Aushärten, insbesondere thermisches Aushärten erhältlich ist, an der Oberfläche des ausgehärteten Lacks separate Bereiche entstehen. Dadurch wird der Reibungskoeffizient und der Reibungswiderstand der ausgehärteten Lacke verbessert. Gleichzeitig bleiben auch gute Temperaturbeständigkeit und Flexibilität erhalten.

Modifizierungseinheiten gemäß der vorliegenden Erfindung zeichnen sich dadurch aus, dass bei Aufbringen eines Lacks, der ein Polymer mit solchen Einheiten enthält, auf eine Metallplatte, z.B. eine Aluminiumplatte, oder auf eine Glasplatte in einer Dicke von 5 µm bis 20 µm und nach thermischer Aushärtung, bei einer Einbrenntemperatur von größer 100 °C, z.B. 150 °C, 200 °C, 220 °C, 250 °C oder 300 °C, insbesondere von 250 °C und einer Einbrenndauer von 2 bis 15 Minuten, bevorzugt 10 Minuten, separate Bereiche an der Oberfläche vorliegen, die eine von der restlichen Oberfläche des Lackfilms verschiedene Topologie/Strukturierung aufweisen. Der Anteil dieser Bereiche bezüglich der Gesamtoberfläche kann z.B. durch Rasterkraftmikroskopie bestimmt werden.

Vorzugsweise beträgt der Anteil der separaten Bereiche auf der Oberfläche, in denen sich Modifizierungseinheiten befinden, - insbesondere bei einem Anteil der Bausteine mit Modifizierungseinheiten von 20 Massen-% bezogen auf das gesamte Polymer - mindestens 5 Flächen-%, mindestens 15 Flächen-%, mindestens 20 Flächen-%, mindestens 30 Flächen-%, mindestens 40 Flächen-%, mindestens 50 Flächen-% und bis zu 60 Flächen-%, bis zu 70 Flächen-%, bis zu 80 Flächen-%, bis zu 90 Flächen-% oder bis zu 95 Flächen-%, bezüglich der gesamten Oberfläche. Entsprechend beträgt der Anteil an Bereichen auf der Oberfläche, in denen sich Basispolymer befindet, mindestens 5 Flächen-%, mindestens 15 Flächen-%, mindestens 20 Flächen-%, mindestens 30 Flächen-%, mindestens 40 Flächen-%, mindestens 50 Flächen-% und bis zu 60 Flächen-%, bis zu 70 Flächen-%, bis zu 80 Flächen-%, bis zu 90 Flächen-% oder bis zu 95 Flächen-%, bezüglich der gesamten Oberfläche.

Die einzelnen separaten Bereiche weisen vorzugsweise eine charakteristische Größe von mindestens 0,1 µm und bevorzugt von mindestens 0,2 µm auf. Die Größe der separaten Bereiche kann sehr stark variieren und auch im Bereich von bis zu mehreren µm, insbesondere bis zu 10 µm, vorzugsweise bis zu 5 µm liegen.

In einer Ausführungsform sind die mit dem Basispolymer bei Aushärtung bzw. Filmbildung unverträglichen Modifizierungseinheiten langkettige Polysiloxane. Polysiloxane sind Ketten aus Siliciumatomen, die mit Sauerstoffatomen verknüpft sind. Die freien Valenzen des Siliciums können durch Seitenketten besetzt sein. In einer bevorzugten Ausführungsform sind die Seitenketten unabhängig voneinander Alkyl, Alkoxy, Alkenyl, Alkinyl, die gegebenenfalls durch Halogen, OH, COOH und/oder Amino substituiert sind. Bevorzugte Seitenketten sind Alkyl, z.B. C₁-C₆-Alkyl, insbesondere Methyl. Entsprechend sind als Modifizierungseinheiten Polydialkylsiloxane (PDAS) und insbesondere Polydimethylsiloxane (PDMS) besonders bevorzugt.

Die Endgruppen der Polysiloxane können unabhängig voneinander Reste ausgewählt aus Alkyl, Alkoxy, Alkoxyalkyl, Alkinyl, Aryl oder Heteroaryl sein, die gegebenenfalls durch Halogen, OH, COOH, Cycloalkyl, Epoxide und/oder Amino substituiert sein können. Die Polysiloxane sind über eine oder beide Endgruppen und/oder eine oder mehrere Seitenketten mit dem Basispolymer verknüpft. Die Verknüpfung erfolgt über mindestens eine reaktionsfähige Gruppe, die z.B. OH-, SH-, COOH-, NH₂-, CN-, OCN-, Anhydrid-, Epoxy- und/oder Halogengruppen umfasst und mit einer komplementären reaktionsfähigen Gruppe auf dem Basispolymer reagiert hat. Es können eine oder mehrere reaktionsfähige Gruppen, bevorzugt eine oder zwei reaktionsfähige Gruppen an einem oder an beiden Enden des Siloxans vorliegen. Besonders bevorzugt liegen zwei reaktionsfähige Gruppen an einem Ende des Polysiloxans vor.

Die Einführung der Modifizierungseinheiten in das Basispolymer erfolgt vorzugsweise über modifizierte Bausteine, z.B. Monomere, die die Modifizierungseinheiten, verknüpft durch reaktionsfähige Gruppen, umfassen, die mit unmodifizierten Bausteinen einer Polymerisationsreaktion unterzogen werden.
In einer bevorzugten Ausführungsform können Modifizierungseinheiten mit einer reaktionsfähigen Gruppe in das zu funktionalisierende Polymer eingebracht werden, indem man sie z.B. zunächst in einem molaren Verhältnis von 1:1 mit einer trimeren Monomereinheit, wie beispielsweise einem trimeren Isocyanataddukt umsetzt. Die dabei entstehende Verbindung kann anschließend mit z.B. der verbleibenden Isocyanatgruppe mit den reaktionsfähigen Gruppen der weiteren Monomere reagieren und so ein Kettensegment eines funktionalisierten Polymers bilden.

Polysiloxane bestehen aus mehreren Siloxan-Einheiten (Si-Einheiten), die über Sauerstoffatome miteinander verknüpft sind. Die Polysiloxane weisen erfindungsgemäß 50 bis 200 Si-Einheiten und bevorzugt 60 bis 150 Si-Einheiten. Unter langkettigen Polysiloxanen werden insbesondere Polysiloxane verstanden, die mindestens 20, mehr bevorzugt mindestens 30, noch mehr bevorzugt mindestens 40 und insbesondere mindestens 60 Si-Einheiten aufweisen und vorzugsweise bis zu 500, bevorzugt bis zu 300, insbesondere bis zu 200 und am meisten bevorzugt bis zu 150 Si-Einheiten aufweisen.

Erfindungsgemäß sind die Polysiloxane Polydialkylsiloxane, insbesondere Polydimethylsiloxane (PDMS). Geeignete Polydimethylsiloxane sind beispielsweise 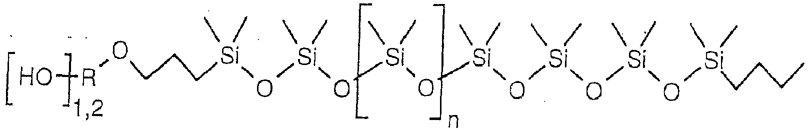 α-Hydroxyalkoxy-ω-alkylpolydimethylsiloxane (Formel I), 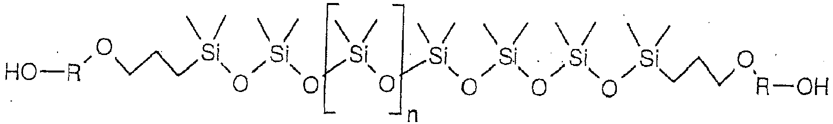 bis-(Hydroxyalkoxyethyl)-polydimethylsiloxane (Formel II), 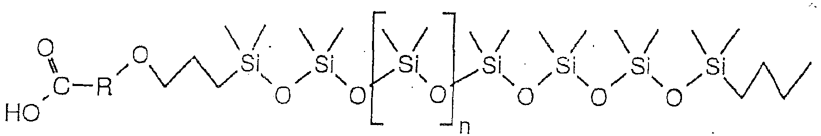 α-Carboxyalkoxypropyl-ω-butyl-polydimethylsiloxane (Formel III) und

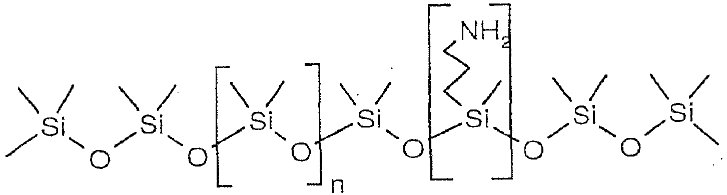

Aminopropylpolydimethylsiloxane (Formel IV). n wird so gewählt, um Kettenlängen im oben genannten Bereich zu geben. R stellt einen Alkylenrest dar, insbesondere einen Alkylenrest mit 1 bis 30, vorzugsweise mit 2 bis 6 Kohlenstoffatomen.

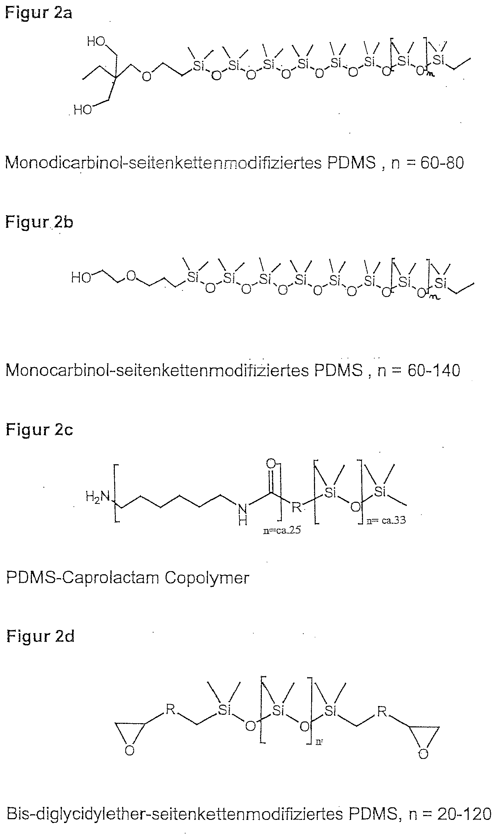

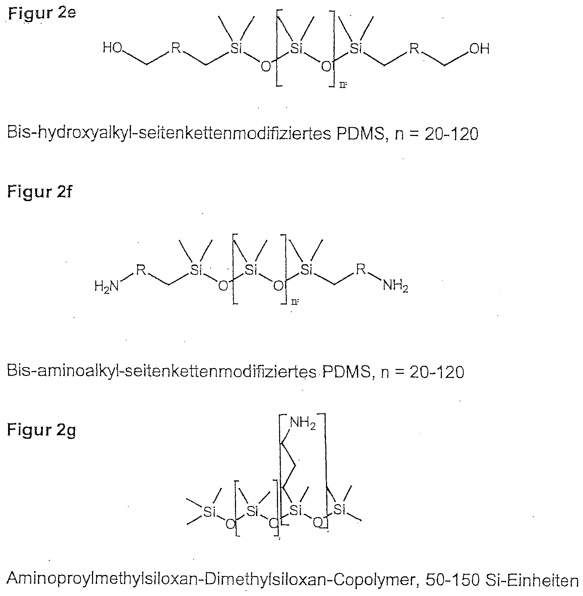

Vorzugsweise werden mono- oder difunktionelle Polydimethylsiloxane verwendet. Besonders bevorzugt ist ein α-difunktionelles Polydimethylsiloxan wie etwa in Formel I dargestellt. In Figur 2 sind beispielhaft einige Polydimethylsiloxane gezeigt. In einer besonders bevorzugten Ausführungsform ist das Polydimethylsiloxan α-(2,2-Dimethylolbutoxy)-propyl-ω-n-butylpolydimethylsiloxan. Die Herstellung solcher Polydimethylsiloxane ist bekannt, wie beispielsweise in EP 0 430 216 beschrieben.

Aufgrund ihrer relativ großen Molmasse verringern die Polysiloxane selbst bei höheren Massenanteilen die mittlere Molmasse der Polymere, insbesondere von Polyamidimiden und Polyimiden, weniger als kleinere molekulare Bausteine bei vergleichbaren Massenanteilen. Daher werden die Filmeigenschaften des Lacks durch Einbringen der Modifizierungseinheiten praktisch nicht beeinträchtigt.

Für die Anordnung der Modifizierungseinheiten, z.B. der Polysiloxane, und dem Basispolymer im erfindungsgemäßen Polymer gibt es verschiedene Ausführungsformen.

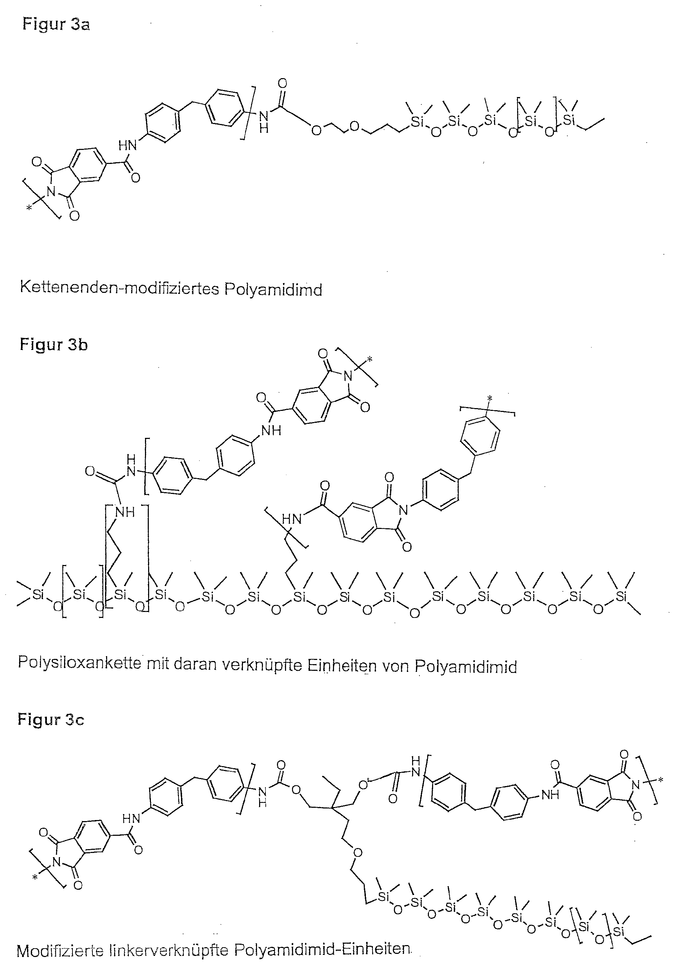

Modifizierungseinheiten können mit dem Basispolymer Kettenendenmodifizierte Polymere (siehe z.B. Figur 3a) oder eine Polymerkette der Modifizierungseinheiten mit daran verknüpften Einheiten des Basispolymers (siehe z.B. Figur 3b) bilden.

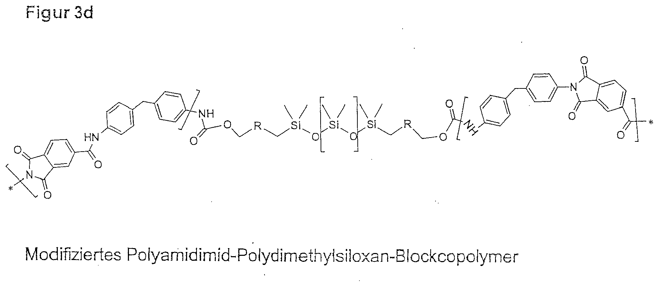

Di- oder polyfunktionelle Modifizierungseinheiten können mit Einheiten des Basispolymers ein linkerverknüpftes Polymer (siehe z.B. Figur 3c) oder ein Blockcopolymer (siehe z.B. Figur 3d) bilden. Vorzugsweise wird dabei die Modifizierungseinheit, die an einer der Endgruppe zwei reaktionsfähige Gruppen und an der anderen keine reaktionsfähige Gruppe aufweist, verwendet. Dies führt dann zu einem Einfügen der Modifizierungseinheit als Linker in das Basispolymer (siehe Figur 3c). Alternativ kann eine α,ω-difunktionelle Einheit verwendet werden, die an jeder Endgruppe reaktionsfähig Gruppen aufweist. Dies führt dann zur Bildung eines Blockcopolymers (siehe auch Figur 3d).

In einer bevorzugten Ausführungsform wird linkerverknüpftes Basispolymer, insbesondere linkerverknüpftes Polyamidimid verwendet, wobei Polysiloxan, insbesondere Polydimethylsiloxan, welches vorzugsweise 60 bis 80 Si-Einheiten, z.B. ca. 65 Si-Einheiten, aufweist, als Linker zwischen den Basispolymereinheiten, insbesondere Polyamidimidpolymer-Einheiten, fungiert (siehe Figur 3c).

In einer weiteren bevorzugten Ausführungsform wird endgruppenmodifiziertes Basispolymer, insbesondere endgruppenmodifiziertes Polyamidimid verwendet, wobei das verwendete Polysiloxan, insbesondere Polydimethylsiloxan, vorzugsweise 60 bis 80 Si-Einheiten, z.B. ca. 65 Si-Einheiten, aufweist (siehe Figur 3a).

In einer weiteren bevorzugten Ausführungsform werden Seitenkettenfunktionalisierte, z.B. mit Aminoalkylgruppen funktionalisierte Modifizierungseinheiten verwendet, die mit reaktionsfähigen Gruppen, z.B. Isocyanatgruppen des Basispolymer, z.B. eines Polyamidimids, reagieren (siehe auch Figur 3b).

In noch einer weiteren Ausführungsform werden funktionalisierte Polymere verwendet, wobei α,ω-Bis-hydroxyalkylterminierte Polysiloxane, insbesondere α,ω-Bis-hydroxyalkylterminierte Polydimethylsiloxane, mit dem Basispolymer, z.B. einem Polyamidimid, ein Blockcopolymer bilden (siehe Figur 3d).

Besonders vorteilhafte Ergebnisse in Bezug auf die Gleitfähigkeit des Lacks werden erzielt, wenn Kombinationen oder Mischungen von Polymeren mit mehreren verschiedenen Modifizierungseinheiten, die unterschiedliche Kettenlängen, z.B. eine unterschiedliche Anzahl von Si-Einheiten aufweisen, verwendet werden. Erfindungsgemäß ist die Kombination von Polymeren, wobei das erste Polymer mit einem Polysiloxan, insbesondere einem Polydimethylsiloxan, mit 60-80 Si-Einheiten funktionalisiert ist und das zweite Polymer mit einem Polysiloxan, insbesondere einem Polydimethylsiloxan, mit 120-140 Si-Einheiten funktionalisiert ist. Das Massenverhältnis des ersten und zweiten Polymers beträgt z.B. 10:90 bis 90:10, bevorzugt 30:70 bis 70:30, besonders bevorzugt 40:60 bis 60:40, z.B. 50:50.

Bevorzugt wird ein Kettenenden-modifiziertes Basispolymer, insbesondere ein Kettenenden-modifiziertes Polyamidimid (siehe Figur 3a), wobei die Endgruppen 120-140 Si-Einheiten, z.B. ca. 132 Si-Einheiten, aufweisen, mit einem linkerverknüpften Basispolymer, insbesondere einem linkerverknüpften Polyamidimid (siehe Figur 3c), wobei die Polysiloxanlinker 50 bis 70 Si-Einheiten, z.B. ca. 65 Si-Einheiten, aufweisen, in einem Massenverhältnis von 0,8 : 1,2 bis 1,2 : 0,8 und insbesondere von 1 : 1 gemischt.
Der Anteil der Bausteine mit Modifizierungseinheiten, bezogen auf das gesamte Polymer, beträgt vorzugsweise 2 bis 70 Massen-%, bevorzugt 5 bis 50 Massen-%, und besonders bevorzugt 10 bis 30 Massen-%. Ein Anteil der Bausteine mit Modifizierungseinheiten von 15-25 Massen-% ist am stärksten bevorzugt. Es können Polymere mit einem höheren Anteil an Modifizierungseinheiten mit Polymeren, die keine Modifizierungseinheiten enthalten, gemischt werden. Es ist auch möglich, Mischungen von Polymeren mit Modifizierungseinheiten, die unterschiedliche Massen-% an Modifizierungseinheiten enthalten, mit verschiedenen Polymeren, die keine Modifizierungseinheiten enthalten, zu verwenden.

Um das Polymer umfassend ein Basispolymer und Modifizierungseinheiten herzustellen, können beispielsweise Polyole, die für die Herstellung von Polyestern und Polyesterimiden verwendet werden, mit Carboxylgruppen und Anhydridgruppen der Modifizierungseinheiten unter Ausbildung von Estern reagieren. Polycarbonsäuren und Polycarbonsäureanhydride, die für die Herstellung von Polyestern, Polyamiden, Polyesterimiden, Polyamidimiden und Polyimiden verwendet werden, können mit OH-Gruppen der Modifizierungseinheiten unter Ausbildung von Estern und mit Aminogruppen unter Ausbildung von Amiden reagieren. Polyisocyanate, die für die Herstellung von Polyesterimiden, Polyamidimiden und Polyimiden verwendet werden, können mit OH-Gruppen der Modifizierungseinheiten unter Ausbildung von Urethan-Gruppen reagieren. Polyisocyanate können ebenfalls mit Aminogruppen der Modifizierungseinheiten unter Ausbildung von Harnstoffgruppen reagieren.

Für die Herstellung von selbstvernetzenden Polyestern werden als Monomere vorzugsweise Terephthalsäure oder Terephthalsäuredimethylester und/oder Isophthalsäure, Glycerin oder Trishydroxyethylisocyanurat und/oder Ethylenglykol verwendet. Diese Monomere können auch für die Herstellung von Polyestern für die Vernetzung mit verkappten Polyisocyanaten verwendet werden.

Polyamide für Lacke bestehen vorzugsweise aus aliphatischen Dicarbonsäuren und Diaminen und/oder aus Laktamen bzw. Aminocarbonsäuren.

Als Monomere für die Herstellung von Polyesterimiden werden vorzugsweise Terephthalsäure oder der Dimethylester der Terephthalsäure, Trimellithsäureanhydrid, Glycerin oder Trishydroxyethylisocyanurat und Ethylenglykol verwendet.

Polyimide können aus Tetracarbonsäuredianhydriden, wobei vorzugsweise Pyromellithsäuredianhydrid (PMDA, 1,2,4,5-Benzoltetracarbonsäuredianhydrid), verwendet wird, und aromatischen Diisocyanaten, wobei bevorzugt 4,4'-Diisocyanatodiphenyloxid und/oder 4,4'-Diisocyanatodiphenylmethan (MDI) verwendet werden, hergestellt werden.

Polyamidimide können aus Tricarbonsäureanhydriden, wobei bevorzugt Trimellithsäuredianhydrid (TMA, 1,2,4-Benzoltricarbonsäureanhydrid) verwendet wird, und aromatischen Diisocyanaten, wobei bevorzugt 4,4'-Diisocyanatodiphenylmethan verwendet wird, hergestellt werden.

Ein weiterer Gegenstand der Erfindung ist ein ausgehärteter Lack erhältlich durch Aushärten, insbesondere thermisches Aushärten eines Lacks gemäß der Erfindung, wobei an der Oberfläche des ausgehärteten Lacks separate Bereiche vorliegen.

Ein thermisches Aushärten umfasst dabei insbesondere eine Temperaturbehandlung von 400 °C bis 700 °C, bevorzugt von 450 °C bis 600 °C und noch stärker bevorzugt von 525 °C bis 625 °C.

Ein weiterer Aspekt der vorliegenden Erfindung ist ein Verfahren zur Herstellung des erfindungsgemäßen Lacks, dadurch gekennzeichnet, dass ein erster modifizierter Baustein, z.B. ein Monomer oder ein Präpolymer, der mindestens eine Modifizierungseinheit aufweist, mit mindestens einem zweiten Monomer polymerisiert wird, um ein Polymer mit Modifizierungseinheiten zu erhalten, das zusammen mit einem Lösungsmittel und gegebenenfalls Additiven zu einem Lack für die Beschichtung von Oberflächen formuliert wird.

In einer besonders bevorzugten Ausführungsform wird der erfindungsgemäße Lack dadurch hergestellt, dass ein Diisocyanat mit einem Polysiloxan mit reaktionsfähigen Gruppen, z.B. OH, COOH oder NH₂, umgesetzt wird und das Reaktionsprodukt, z.B. ein Präpolymer, anschließend mit einem Säureanhydrid polymerisiert wird.

Die hergestellten Polymere, die als kolloidale Lösungen oder Dispersionen vorliegen, werden zu applikationsfähigen Lacken komplettiert. Die Polymere werden mit geeigneten Lösungsmitteln auf die gewünschte Viskosität verdünnt. Vorzugsweise weisen die applikationsfähigen Lacke eine Viskosität von 10 bis 2500 mPa*s auf, bevorzugt von 100 bis 800 mPa*s und besonders bevorzugt von 200 bis 500 mPa*s.

Geeignete Lösungsmittel für die Herstellung von Lacken sind beispielsweise Kresole und Xylenole, die gegebenenfalls einen Anteil an Phenol enthalten, Glykolether, beispielsweise ein Oligoglykolen-Ether, wie beispielsweise Methyldiglykol, Glykoletherester, wie beispielsweise Butyldiglykolacetat, Propylencarbonat, höhere Alkohole, wie beispielsweise Benzylalkohol und Diacetonalkohol, und höhere Ketone, wie beispielsweise Isophoron. Zur Steuerung der Viskosität, zum Beispiel im Hinblick auf den Applikationsfestkörper, werden Verdünnungsmittel verwendet, wie z.B. aromatische Kohlenwasserstoffe wie Xylole und C₃-C₅-Aromaten, die auch Alkylnaphthaline enthalten können. Als Beispiel sind hier Solvesso®100, Solvesso®150, Solvesso®200, Handelsprodukte der Exxon, genannt.

Sofern Polyisocyanate für die Herstellung der funktionalisierten Polymere verwendet werden, werden bevorzugt polare Lösungsmittel ohne reaktive Wasserstoffe eingesetzt, wie beispielsweise N-Methylpyrrolidon, N-Ethylpyrrolidon oder N,N-Dimethylacetamid. Diese sogenannten Prozesslösungsmittel stellen einen Bestandteil des Lacks dar.

Ferner werden gegebenenfalls Additive wie etwa Katalysatoren und Vernetzungspartner zugesetzt. Gemäß der vorliegenden Erfindung handelt es sich bei den Katalysatoren beispielsweise um Umesterungskatalysatoren, wie beispielsweise Tetrabutyltitanat, oder Umurethanisierungskatalysatoren, wie beispielsweise organische Zinnsalze. Als Vernetzungspartner können zum Beispiel, sofern Polyester als Polymere verwendet werden, für die Urethanvernetzung erforderliche Mengen an verkappten Polyisocyanat, z.B. Isomerengemische und Derivate des Diisocyanatodiphenylmethan, verkappt mit Kresolen, zugesetzt werden. Weitere Additive können z.B. Entschäumer und Verlaufsadditive sein.
In einem weiteren Aspekt betrifft die vorliegende Erfindung ein Verfahren zur Herstellung einer beschichteten Oberfläche, dadurch gekennzeichnet, dass ein erster modifizierter Baustein, z.B. ein Monomer oder ein Präpolymer, mit mindestens einer Modifizierungseinheiten mit mindestens einem zweiten Monomer polymerisiert wird, um ein Polymer mit kovalent gebundenen Modifizierungseinheiten zu erhalten, das zusammen mit einem Lösungsmittel und gegebenenfalls Additiven zu einem Lack formuliert wird und der Lack auf eine Oberfläche aufgebracht wird und einem Einbrennprozess unterzogen wird, wobei an der Oberfläche des ausgehärteten Lacks separate Bereiche vorliegen und worin die Modifizierungseinheiten Polysiloxane sind, dadurch gekennzeichnet, dass Kombinationen oder Mischungen von Polymeren mit mehreren verschiedenen Modifizierungseinheiten, die unterschiedliche Kettenlängen, nämlich eine unterschiedliche Anzahl von Si-Einheiten aufweisen, verwendet werden, dass die Modifizierungseinheiten Polydialkylsiloxane sind, welche 50 bis 200 Si- Einheiten aufweisen und dass ein erstes Polymer umfassend als Modifizierungseinheiten Polysiloxane mit 60 bis 80 Si-Einheiten und ein zweites Polymer umfassend als Modifizierungseinheiten Polysiloxane mit 120 bis 140 Si-Einheiten, eingesetzt wird.

Während des Einbrennprozesses findet der Filmbildungsprozess des erfindungsgemäßen Lacks statt. Dabei verdunsten die Lösungsmittel und gegebenenfalls laufen Vernetzungsreaktionen ab. Zum anderen findet während des Einbrennprozesses eine Phasentrennung des Polymers und den Modifizierungseinheiten statt. Dadurch orientieren sich die Modifizierungseinheiten an der Oberfläche des Lacks, wodurch eine verbesserte Gleitfähigkeit erreicht wird. Die Phasentrennung führt zu einer inhomogenen Oberfläche des Lacks, welches durch eine veränderte Oberflächenstruktur gegenüber Lack ohne Modifizierungseinheiten deutlich wird. Es wird zur Zeit angenommen, dass die Inkompatibilität des Polymers mit den Modifizierungseinheiten auf die Neigung des Polymeranteils, polare Wechselwirkungen auszubilden und die Neigung der Modifizierungseinheiten zu unpolaren Wechselwirkungen zurückzuführen ist.
Der erfindungsgemäße Lack kann auf verschiedenste Oberflächen aufgetragen werden, insbesondere auf Metall-, Glas- oder Kunststoffoberflächen. Es ist auch möglich, den erfindungsgemäßen Lack, umfassend funktionalisiertes Polymer, als äußerste Lackschicht auf einen Gegenstand aufzutragen, auf den bereits ein oder mehrere konventionelle Lackschichten aufgetragen wurden.

Der erfindungsgemäße Lack kann zum Auftragen als Elektroisolierlack auf einen Draht, insbesondere auf einen Kupferdraht, verwendet werden. Vorzugsweise stellt der Draht einen elektrischen Leiter dar. Ein elektrischer Leiter gemäß der vorliegenden Erfindung ist ein Medium, welches frei bewegliche Ladungsträger besitzt und daher zum Transport von elektrischem Strom fähig ist. Bevorzugte elektrische Leiter gemäß der vorliegenden Erfindung sind Metalle oder Metalllegierungen, insbesondere Kupfer und Aluminium.

Drähte werden gewöhnlich im Mehrschichtverfahren mit unterschiedlichen Lackmaterialien beschichtet. In einer Ausführungsform wird der erfindungsgemäße Lack daher als äußere Schicht auf einen Draht, der bereits mit einem Elektroisolierlack ohne Modifizierungseinheiten beschichtet ist, aufgebracht. Der Draht, auf dem der erfindungsgemäße Lack als äußere Schicht aufgebracht wird, kann als untere Schichten einen oder mehrere Elektroisolierlacke ohne Modifizierungseinheiten enthalten.

Bevorzugt wird der erfindungsgemäß hergestellte Lack mit üblichen Lackiermaschinen, die eine horizontale und vertikale Anordnung aufweisen können, auf Drähte, bevorzugt Kupferdrähte, aufgetragen. Die Drähte können Durchmesser von 0,01 bis 10 mm, bevorzugt 0,01 bis 3,0 mm, aufweisen und es kann sich um Flach- oder Profildrähte handeln. Der Elektroisolierlack wird in 2 bis 40 Tauchungen, bevorzugt 4 bis 30, stärker bevorzugt in 8 bis 25 Tauchungen über Filz- oder Düsenabstreicher aufgebracht und im Umluftofen mit Umlufttemperaturen von 400 °C bis 700 °C, bevorzugt 450 °C bis 600 °C, stärker bevorzugt 525 °C bis 625 °C, eingebrannt. In einer bevorzugten Ausführungsform ist der Lackierungsprozess kontinuierlich und die Lackdrähte werden mit Abzugsgeschwindigkeiten von 20 bis 250 m/min gefahren, bevorzugt 60 bis 200 m/min, stärker bevorzugt 80 bis 140 m/min.

Der erfindungsgemäße Lack kann für verschiedene Zwecke verwendet werden. Da die erfindungsgemäßen Lacke einen geringen Reibungskoeffizienten und somit einen geringen Reibungswiderstand aufweisen, können sie insbesondere in allen Anwendungen vorteilhaft eingesetzt werden, in denen diese Eigenschaften gewünscht oder/und vorteilhaft sind. Bevorzugt ist die Verwendung als anti-Haft- und/oder anti-Fouling-Beschichtung von Oberflächen. In einer Ausführungsform wird der erfindungsgemäße Lack als Beschichtung in Gleitlagern verwendet. In einer weiteren Ausführungsform wird der erfindungsgemäße Lack für Fahrzeuge, z.B. für Schiffsteile, insbesondere für den Schiffsrumpf verwendet. Weiterhin bevorzugt ist die Verwendung für tribologisch beanspruchte Stellen, z.B. Umlenkrollen für Gurte und Seile.

Besonders günstig hat sich der erfindungsgemäße Lack bei der Schiffslackierung erwiesen, da er hervorragende Anti-Fouling-Eigenschaften sowie hervorragende Fouling-Release-Eigenschaften aufweist. Die hierin beschriebenen Polymere, umfassend ein Basispolymer und Modifizierungseinheiten, die nach Aushärtung des Polymers mit dem Basispolymer unverträglich sind, können insbesondere als Bindemittel in Schiffslackierungen eingesetzt werden. Dabei wird als Basispolymer vorzugsweise ein Polyurethan eingesetzt. Es wurde festgestellt, dass durch Verwendung der erfindungsgemäßen Lacke eine verminderte Ansiedelung und ein vermindertes Aufwachsen von Mikroorganismen auf der Filmoberfläche zu beobachten ist.

Es wird angenommen, dass dies auf die chemische Zusammensetzung der erfindungsgemäßen Lacke zurückzuführen ist, welche keine für Mikroorganismen nötigen Nährstoffe oder verwertbare Substanzen beinhaltet. Durch Auftragen der erfindungsgemäßen Lacke können solche Nährstoffe oder verwertbaren Substanzen auch der unter dem Lack liegenden Oberfläche nicht entzogen werden. Damit ist die Filmoberfläche der erfindungsgemäßen Lacke nur unzureichend als Lebensraum für maritime Mikroorganismen geeignet. Erst nach einiger Zeit wird durch das Absorbieren eines Conditioningfilms, insbesondere eines Mikroorganismenfreien Nährstofffilms eine genügend hohe Nährstoffdichte auf der Oberfläche erreicht, dass Mikroorganismen sich ansiedeln können. Es wurde aber weiterhin festgestellt, dass ein Entfernen der Mikroorganismen bzw. Reinigen solcher Oberflächen, wenn sie mit erfindungsgemäßen Lacken beschichtet sind, sich äußerst einfach bewerkstelligen lässt.

Auch das Anhaften von größeren Organismen, wie z.B. Muscheln, insbesondere Miesmuscheln, wird durch den erfindungsgemäßen Lack erfolgreich verhindert. Dies wird auf den niedrigen Reibungskoeffizienten der erfindungsgemäßen Lacke zurückgeführt, auf grund dessen Organismen wie Muscheln nicht an einer solchen Lackoberfläche festhaften können.

Neben der Anwendung der Lackierung von Schiffsteilen können die erfindungsgemäßen Lacke auch allgemein in Lackierungen eingesetzt werden, die einen Bewuchs von Organismen oder Mikroorganismen verhindern sollen.

Derzeit kommerziell verwendete Anti-Fouling- oder Fouling-Release-Beschichtungen basieren im Allgemeinen auf Polysiloxanharzen, die in einer Schichtdicke von ca. 100 bis 300 µm aufgebracht werden. Üblicherweise enthalten diese Schichten auch freies, chemisch nicht gebundenes Silikonöl. Die Wirkungsweise dieser Lacke beruht auf einer niedrigen Oberflächenenergie der Lackschichten und dem Vorhandensein eines flüssigen Silikonfilms. Diese Merkmale erschweren es, dass sich Mikroorganismen oder Organismen, insbesondere Fouling-Organismen wie z.B. Seepocken, dauerhaft ansiedeln können. Die Haftkraft der Fouling-Organismen auf solchen Lacken ist so gering, dass häufig bereits die Scherkraft des Wassers bei Reisegeschwindigkeit ausreicht, um die Oberfläche zu reinigen. Zusätzlich wird durch solche herkömmliche Fouling-Release-Beschichtungen der Reibungswiderstand im Wasser und somit der Treibstoffverbrauch der Schiffe verringert.

Die bisher verwendeten Silikonbeschichtungen haben jedoch mehrere gravierende Nachteile. So enthalten die ausgehärteten Lackschichten üblicherweise einen Anteil an freiem, nicht chemisch gebundenem Silikonöl, welches im Laufe der Zeit an das Wasser abgegeben wird. Zudem werden wegen des nicht gebundenen Silikonöls bei der Lackierung die Lackierhallen kontaminiert, sodass es unmöglich wird, in der gleichen Halle herkömmliche Lacksysteme zu verarbeiten. Dieser Nachteil steht derzeit einer breiten Anwendung der Fouling-Release-Technologie im Wege. Weiterhin sind die bisher verwendeten Silikonlacke mechanisch sehr instabil und können bereits mit dem Fingernagel abgekratzt werden. Für die Anwendung auf Schiffen, die üblicherweise in rauer Umgebung eingesetzt werden, ist diese Eigenschaft sehr ungünstig.

Durch die erfindungsgemäße Verwendung von Lacken, umfassend ein Polymer, umfassend ein Basispolymer und Modifizierungseinheiten, die nach Aushärtung des Polymers mit dem Basispolymer unverträglich sind, werden die oben beschriebenen Nachteile überwunden. Die erfindungsgemäß eingesetzten Polymere weisen ein hartes Polymergrundgerüst aus Basispolymer kombiniert mit chemisch gebundenen Modifizierungseinheiten, insbesondere Silikonketten, auf. Dies hat zur Folge, dass ein mechanisch sehr belastbarer Lackfilm entsteht, der durch quasi-flüssige, aber chemisch gebundene Silikonketten die Fouling-Release-Wirkung und auch die reibungsminimierende Eigenschaft eines Silikonlacks zeigt. Erfindungsgemäß werden also die positiven Eigenschaften klassischer Lacke, insbesondere ein harter stabiler Lackfilm, mit den positiven Eigenschaften von Silikonlacken kombiniert, ohne die Nachteile Letzterer in Kauf nehmen zu müssen. Dadurch, dass erfindungsgemäß Modifizierungseinheiten, insbesondere Polysiloxane kovalent an das Basispolymer gebunden sind, sind keine freien Silikonverbindungen im Lackfilm vorhanden. Es wird somit auch kein Silikon an die Umwelt abgegeben und eine Kontamination von Lackierhallen wird vermieden.

Mit dem erfindungsgemäßen Lack werden insbesondere dauerhafte, harte Fouling-Release-Beschichtungen erhalten. Diese Fouling-Release-Beschichtungen verringern den Reibungswiderstand im Wasser und somit den Treibstoffverbrauch der Schiffe und verhindern das Anhaften von Fouling-Organismen.
Der erfindungsgemäße Lack kann auf eine beliebige Oberfläche aufgetragen werden, z.B. auf eine metallische Oberfläche oder eine nichtmetallische Oberfläche, wie z.B. eine Kunststoffoberfläche, eine keramische Oberfläche oder eine Glasoberfläche. Vorzugsweise wird der erfindungsgemäße Lack als äußere Schicht oder Schichten auf eine Oberfläche aufgetragen, die mit einer oder mehreren Lackschichten überzogen sein kann.
Obwohl die Oberfläche, die mit dem erfindungsgemäßen Lack beschichtet ist, bereits sehr gute Gleitfähigkeit aufweist, kann als äußere Schicht zusätzlich ein externes Gleitmittel aufgetragen werden.

Die Erfindung betrifft weiterhin die Verwendung eines Polymers als Bestandteil eines Lacks, umfassend ein Basispolymer und Modifizierungseinheiten, die nach Aushärtung des Polymers mit dem Basispolymer unverträglich sind, worin die Modifizierungseinheiten kovalent an das Basispolymer gebunden sind und worin die Modifizierungseinheiten Polysiloxane sind, dadurch gekennzeichnet, dass Kombinationen oder Mischungen von Polymeren mit mehreren verschiedenen Modifizierungseinheiten, die unterschiedliche Kettenlängen nämlich eine unterschiedliche Anzahl von Si-Einheiten aufweisen, verwendet werden, dass die Modifizierungseinheiten Polydialkylsiloxane sind, welche 50 bis 200 Si-Einheiten aufweisen und dass ein erstes Polymer umfassend als Modifizierungseinheiten Polysiloxane mit 60 bis 80 Si-Einheiten und ein zweites Polymer umfassend als Modifizierungseinheiten Polysiloxane mit 120 bis 140 Si-Einheiten, eingesetzt wird.

Die Polymere können in Form von Gelpartikeln in dem Lack vor. Diese Gelpartikel enthalten Modifizierungseinheiten, z.B. langkettige Polysiloxane und insbesondere langkettige Polydimethylsiloxane, an ihrer Oberfläche. Die Modifizierungseinheiten können nach außen abstehen (Polymer-Brush-Struktur). Bei Kontakt einer Oberfläche, die eine solche Gelpartikelbeschichtung enthält, mit einer Gegenfläche, z.B. einer metallischen oder nichtmetallischen Oberfläche, wie etwa einer Stahloberfläche oder einer Wickelrolle eines Drahtwicklers, werden die Gelpartikel vom Lackträger abgestriffen und sind so auf beiden Reibepartnern verfügbar. Dies führt zu einer nochmaligen Reduzierung des Reibungswiderstands und somit zu einer weiteren Verbesserung der Gleitfähigkeit.

Ebenfalls offenbart, jedoch nicht zur Erfindung gehörend, ist ein Lack zum Beschichten von Oberflächen, umfassend ein Polymer und Polysiloxan-Gelpartikel. Hierbei werden die vorteilhaften Eigenschaften eines Basispolymers, z.B. chemische Stabilität oder/und Härte, mit den vorteilhaften Eigenschaften der Modifizierungseinheiten, z.B. Haftverminderung oder/und Reibungsverminderung dadurch kombiniert erzielt, dass eine Abgabe der in den Gelpartikeln enthaltenen Modifizierungseinheiten an die Umgebung und insbesondere ein Ausbluten durch die Zugabe der Modifizierungseinheiten als Gelpartikel verhindert oder zumindest verringert wird.
Die in den Polysiloxan-Gelpartikeln als Modifizierungseinheiten enthaltenen Polysiloxane sind nach Aushärtung des Polymers mit dem Polymer unverträglich. Sie bilden deshalb nach Aushärtung des Polymers an der Oberfläche des ausgehärteten Lackes separate Bereiche. Gleichzeitig wird ein unmittelbares Austreten der Modifizierungseinheiten verhindert, da die Polysiloxan-Gelpartikel relativ stabil in den ausgehärteten Lack eingebunden sind.
Bei den zugesetzten Polysiloxan-Gelpartikeln handelt es sich insbesondere um Polydialkylsiloxan-Gelpartikel, wobei die Alkylseitenketten vorzugsweise eine Länge von 1 bis 6 Kohlenstoffatomen aufweisen, und besonders bevorzugt um Polydimethylsiloxan-Gelpartikel. Bei den Gelpartikeln handelt es sich insbesondere um vernetzte Gelpartikel.
Als Polymer für den Lack können die hierin zuvor beschriebenen Basispolymere eingesetzt werden und insbesondere Polyamidimide, Polyesterimide, Polyurethane, Polyester, Polyamide, Polyimide, Polyesteramidimide, Polyepoxide, Mischungen oder Kombinationen davon. Besonders bevorzugt sind Polyamidimide, Polyesterimide und Polyurethane und am meisten bevorzugt Polyamidimide. Die Polymere können je nach Anwendung des Lackes ausgewählt werden. Bei Verwendung des Lackes als Anti-Fouling-Beschichtung oder Fouling-Release-Beschichtung wird als Polymer vorzugsweise ein Polyurethan eingesetzt. Bei Verwendung als Elektroisolierdraht finden insbesondere Polyamidimide oder/und Polyesterimide Verwendung.

Ebenfalls offenbart, jedoch nicht zur Erfindung gehörend, ist ein ausgehärteter Lack, der durch thermisches Aushärten eines Lackes umfassend ein Polymer und Polysiloxan-Gelpartikel erhalten wird. Das thermische Aushärten findet vorzugsweise bei Temperaturen von 400 °C bis 700 °C, bevorzugt von 450 °C bis 600 °C und noch stärker bevorzugt von 525 °C bis 625 °C statt.

Ebenfalls offenbart, jedoch nicht zur Erfindung gehörend, ist ein Verfahren zur Herstellung eines Lackes, bei dem eine Polysiloxan-Gelpartikel-Dispersion einem ein Polymer enthaltenden Lack zugemischt wird. Bei dem ein Polymer enthaltenden Lack kann es sich um einen herkömmlichen Lack handeln oder um einen wie hierin zuvor beschriebenen modifizierten Lack.
Die Gelpartikel können insbesondere als reibungsreduzierende Komponente in polymere Beschichtungen und Bulkmaterialien, insbesondere in Lacke eingemischt werden. Insbesondere in Lacken auf Basis der hierin beschriebenen Polymeren und besonders bevorzugt in Elektroisolierlacken, beispielsweise auf Basis von Polyamidimid oder Polyesterimid, zeigt sich eine starke Reduktion des Reibungswiderstandes. Diese Beschichtungen weisen außerdem eine sehr niedrige Haftung auf.

Es wurde festgestellt, dass durch die Siloxan-Gelpartikel eine deutliche Reduktion des Reibungswiderstandes in Beschichtungen, insbesondere in Polyamidimid-basierten Beschichtungen, erreicht wird. Polysiloxan-Gelpartikel bieten den Vorteil einer "Additiv-Lösung", d.h. sie können auf einfache Weise herkömmlichen Beschichtungssystemen oder Lacken zugemischt werden.

Es wurde weiterhin festgestellt, dass während des Reibungsprozesses ein Übertrag von Gelpartikeln aus der Beschichtung auf den Gegenstand stattfinden kann und damit eine weitere Reibungsreduktion, z.B. gegenüber Stahl, erhalten wird.
Die Polysiloxan-Gelpartikel können auch vorteilhaft in Antihaft- und/oder Anti-Fouling-Beschichtungen eingesetzt werden.
Herkömmlich verwendete Polydimethylsiloxane bzw. Polydimethylsiloxan-Polyether-Blockcopolymere sind für viele Anwendungen nicht ausreichend temperaturstabil bzw. zeigen Migrationsneigung. Polysiloxan-Gelpartikel können hingegen aufgrund ihrer Vernetzung nicht migrieren und weisen eine höhere Temperaturstabilität auf als Polydimethylsiloxan-Polyether-Blockcopolymere.

Bevorzugt wird eine Polysiloxan-Gelpartikel-Dispersion durch Vernetzen von Vinylgruppenfunktionalisierten Polysiloxanen mit Hydridgruppen-funktionalisierten Polysiloxanen in einem Dispergiermittel hergestellt. Dispersionen können in einen Lack, beispielsweise einen Elektroisolierlack, eingearbeitet werden, um dadurch einen Lack mit niedriger Reibung bereitzustellen. Es besteht aber auch die Möglichkeit, die Geltpartikeldispersion bereits bei der Herstellung eines Lackes einzuarbeiten. Die vernetzten Gelpartikel orientieren sich an die Oberfläche der Lackschicht und führen zu einer nachhaltigen Verbesserung der Gleitfähigkeit der mit einem solchen Lack beschichteten Oberfläche.

Ebenfalls offenbart, jedoch nicht zur Erfindung gehörend, sind Polysiloxan-Gelpartikel sowie Herstellungsverfahren für solche Gelpartikel.

Bevorzugt handelt es sich um Polydialkylsiloxan-Gelpartikel, wobei die Alkylseitenketten vorzugsweise eine Länge von 1 bis 6 Kohlenstoffatomen aufweisen, und am meisten bevorzugt um Polydimethylsiloxan-Gelpartikel. Die Gelpartikel werden vorzugsweise als Dispersion der Gelpartikel in einem Dispergiermittel hergestellt. Die Synthese von Gelpartikeln zur Bildung einer Gelpartikeldispersion erfolgt vorzugsweise in polaren Medien. Vorzugsweise sind die Präpolymere oder Monomere der Gelpartikel in den Dispersionsmedien nicht oder nur gering löslich. Vorzugsweise werden als Matrix- oder Dispergiermittel für die Dispersion NMP (N-methyl-2-pyrrolidon), NEP (N-Ethylpyrrolidon), DMAP (Dimethylpyrrolidon), DMAc (Dimethylacetamid), DMF (Dimethylformamid), Wasser oder wässrige Lösungen oder/und DMSO (Dimethylsulfoxid) verwendet. Besonders bevorzugt ist eine Dispersion in N-Methyl-2-pyrrolidon.
Eine solche Dispersion von Polysiloxan-Gelpartikeln, insbesondere von PDAS- und nochmals bevorzugt von PDMS-Gelpartikeln, kann als Komponente in Beschichtungssysteme eingemischt werden und dadurch als reibungsreduzierende Komponente wirken. Die Emulsion kann durch funktionelle Monomere selbst stabilisiert sein und/oder durch einen Emulgator stabilisiert werden.

Die Gelpartikel können auf verschiedene Weise hergestellt werden. Bevorzugt ist die Herstellung einer Dispersion aus vernetzten Polysiloxan-Gelpartikeln, insbesondere aus vernetzten Polydialkylsiloxan-Gelpartikeln und am meisten bevorzugt aus vernetzten Polydimethylsiloxan-Gelpartikeln mittels in situ-Synthese. Die Gelpartikel können aber auch mittels Additionshärtung (Hydrosilylierung) oder mittels Emulsionspolymerisation hergestellt werden. Die Herstellung kann dabei in wässriger oder in nicht wässriger Matrix erfolgen.

Als Ausgangsmaterial werden vorzugsweise Vinyl-funktionelle Siloxan-Präpolymere in Kombination mit Hydrid-funktionelle Siloxan-Präpolymeren eingesetzt. Die reaktiven Gruppen reagieren über Hydrosilylierung miteinander und bilden vernetzte Polysiloxan-Gelpartikel. Die Vernetzung kann durch einen geeigneten Katalysator unterstützt werden. Es besteht auch die Möglichkeit, nur Vinyl-funktionelle Polysiloxane zu verwenden und eine radikalische Vernetzung, beispielsweise mittels eines Peroxidinitiators, durchzuführen.
Besonders bevorzugt sind Dispersionen, umfassend PDMS-Gelpartikel in NMP (N-Methyl-2-pyrrolidon).

Bevorzugt
bestehen die Gelpartikel ausschließlich aus Polysiloxanen, insbesondere Polydimethylsiloxanen, die miteinander über reaktive Gruppen, wie beispielsweise Vinylgruppen oder Hydridgruppen, verknüpft sind. Es ist aber auch möglich, Gelpartikel bereitzustellen, die einen Kern, insbesondere einen SiO₂- oder einen Polymerkern enthalten.

Die Gelpartikel können zusätzlich zu Modifizierungseinheiten enthaltenden Polymeren eingesetzt werden, um beispielsweise eine Reibungsverminderung oder ein Anti-Fouling zu erzielen. Es besteht aber auch die Möglichkeit, Polysiloxan-Gele anstelle von modifizierten Polymeren einzusetzen, d.h. in herkömmliche Lacke oder Beschichtungsmaterialien einzubringen.
Im Folgenden werden einige besonders bevorzugte Ausgangsstoffe für Polysiloxan-Gelpartikel beschrieben:
Vinyl-terminierte Polydimethylsiloxane 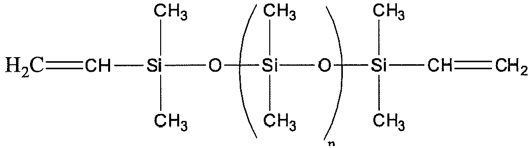 worin n eine ganze Zahl von 0 bis 2.000 darstellt. Bevorzugt ist n mindestens 10, mehr bevorzugt mindestens 20, noch mehr bevorzugt mindestens 30 und bis zu 1.000, mehr bevorzugt bis zu 500.
Vinylmethylsiloxan-dimethylsiloxan-Copolymere, Trimethylsiloxy-terminiert

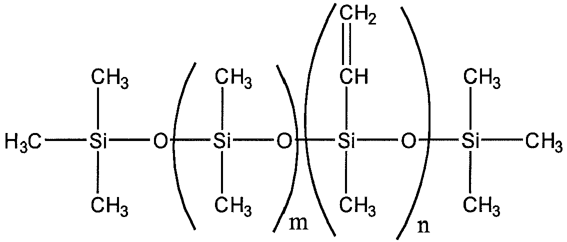

In der Formel können die Dimethylsiloxan- und Vinylmethylsiloxan-Gruppen in beliebiger Reihenfolge auftreten. n bezeichnet dabei den Mol-%-Gehalt an Vinylmethylsiloxan und liegt zwischen 0,5 und 1,5, bevorzugt zwischen 0,8 und 1,2. m gibt den Mol-%-Anteil an Dimethylsiloxan an und berechnet sich als m = 100 - n.

Vinylmethylsiloxan-dimethylsiloxan-Copolymere, Trimethylsiloxy-terminiert werden anhand ihrer Viskositäten charakterisiert. Erfindungsgemäß sind Viskositäten von 250 cSt bis 500.000 cSt verwendbar, insbesondere Viskositäten von 1.000 cSt bis 100.000 cSt.

### Vinyl-funktionelle Makromere

Solche Makromere dienen als "Dendling Ends" und/oder zur Erzeugung von Polymer-Brush-Oberflächen. Geeignete Vinyl-funktionale Makormere sind beispielsweise asymmetrische Monovinyl-terminierte Polydimethylsiloxane, insbesondere Verbindungen mit der Formel 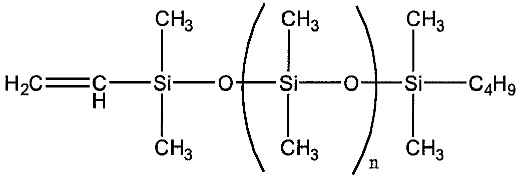 worin n eine ganze Zahl von 0 bis 2.000 annehmen kann. n ist vorzugsweise mindestens 10, mehr bevorzugt mindestens 20 und noch mehr bevorzugt mindestens 30 und bis zu 1.000, mehr bevorzugt bis zu 500.

Als Hydrid-funktionelle Siloxan-Präpolymere können bevorzugt die folgenden Strkuturen eingesetzt werden:

### Trimethylsiloxy-terminierte Methylhydrosiloxan-Dimethylsiloxan-Copolymere, insbesondere mit der allgemeinen Formel

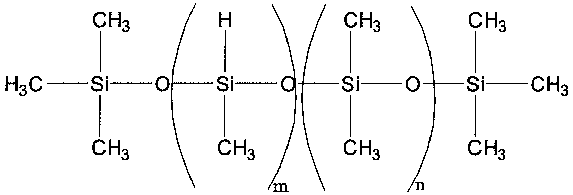

Die Anordnung der Methylhydrosiloxan- und Dimethylsiloxan-Gruppierungen in den Copolymeren ist beliebig. m gibt jeweils den Anteil an Methylhydrosiloxan und n den Anteil an Dimethylsiloxan-Einheiten an. Terminierte Trimethylsiloxy-Methylhydrosiloxan-Dimethylsiloxan-Copolymere mit einer Molmasse von 900 g/Mol bis zu einer Molmasse von 50.000 g/Mol können zur Herstellung der erfindungsgemäßen Gelpartikel eingesetzt werden.

### Hydrid-terminierte Methylhydrosiloxan-Dimethylsiloxan-Copolymere, insbesondere mit der Formel

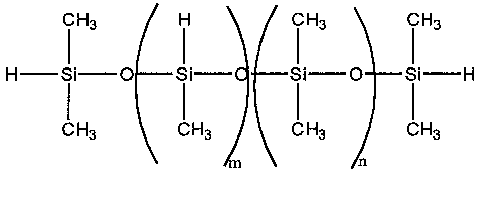

Dimethylhydrosiloxan- und die Dimethylsiloxan-Einheiten können dabei beliebig angeordnet sein. m gibt den Anteil an Methylhydrosiloxan-Einheiten an und n den Anteil an Dimethylsiloxan. m, also der Mol-%-Anteil an Methylhydrosiloxan beträgt vorzugsweise 5 bis 20, mehr bevorzugt 7 bis 8. n, also der Mol-%-Anteil an Dimethylsiloxan beträgt vorzugsweise 90 bis 95, mehr bevorzugt 92 bis 93. Bevorzugt beträgt m, also der Mol-%-Anteil an Methylhydrosiloxan-Einheiten, 10 bis 90, mehr bevorzugt 20 bis 40 und noch mehr bevorzugt 25 bis 30. n, also der Mol-%-Anteil an Dimethylsiloxan beträgt vorzugsweise 50 bis 90, mehr bevorzugt 60 bis 80 und am meisten bevorzugt 70 bis 75. Das Molekulargewicht der verwendeten Hydridterminierten Methylhydrosiloxan-Dimethylsiloxan-Copolymere beträgt vorzugsweise 2.000 bis 2.600 g/Mol.

### Hydrid-terminierte Polydimethylsiloxane, insbesondere der Formel

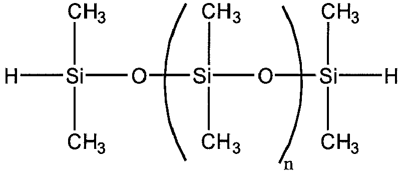

worin n eine ganze Zahl von 3 bis 300, insbesondere von 4 bis 230 darstellt.

Vernetzte Siloxan-Gelpartikel, insbesondere Dispersionen vernetzter PDMS-Gelpartikel können vorteilhafterweise in Lack- oder Beschichtungssysteme eingearbeitet werden. Bevorzugt werden die hierin bevorzugten PDMS-Gelpartikel-Dispersionen in NMP in konventionelle NMP-basierte Polyamidimidlacke, insbesondere Elektroisolierlacke, eingearbeitet. Die Einarbeitung kann z.B. mittels Dispermaten oder Ultra-Turaxx erfolgen. Es ist auch möglich, die Gelpartikel in modifizierte Lacke, insbesondere in modifizierte Polyamidimid-Elektroisolierlacke einzuarbeiten. Die Gele, insbesondere in Form einer Gelpartikeldispersion, können auch in andere Lacke und insbesondere in andere Elektroisolierlacke eingearbeitet werden, z.B. in Polyesterimidelektroisolierlacke, Polyesterelektroisolierlacke, Polyimidelektroisolierlacke, Polyamidelektroisolierlacke/backlacke oder/und Polyurethanelektroisolierlacke/backlacke.

Bevorzugt handelt es sich bei den Gelpartikeln um Gelpartikel mit einem harten Silikakern, insbesondere um PDMS-Brushpartikel mit hartem Silikakern. Als Ausgangspartikel werden dabei Silikatpartikel eingesetzt. Solche Partikel bestehen vorzugsweise aus pyrogener Kieselsäure. Vorzugsweise werden Siliciumdioxidpartikel eingesetzt, deren Oberflächen Hydroxyl- oder/und Vinylgruppen aufweisen. An die Hydroxyl- oder/und Vinylgruppen der Siliciumdioxidpartikel werden dann Siloxane angehängt. Dies kann durch Zugabe eines Hydrid-funktionellen Siloxans, gegebenenfalls in Gegenwart eines Katalysators, z.B. eines Platinkatalysators, erfolgen. Die Verknüpfung erfolgt über eine Hydrosilylierungsreaktion. Das eingesetzte Hydrid-funktionelle Siloxan kann eine oder mehrere Si-H-Funktionen aufweisen. Auch die Molmasse kann variiert werden und beträgt vorzugsweise zwischen 200 und 100.000, mehr bevorzugt zwischen 500 und 5.000 g/Mol.
Alternativ kann ein Hydrid-funktionalisiertes Siloxan mit einem Vinylfunktionellen Silazan umgesetzt werden. Im Anschluss daran kann das Vinyl- bzw. Silazan-terminierte Siloxan mit Hydroxylgruppen von Silikatpartikeln reagieren. Alternativ können auch Chlordialkylvinylsilane, insbesondere Chlordimethylvinylsilane verwendet werden.

Ebenfalls offenbart, jedoch nur im Rahmen des in den Ansprüchen 1-14 definierten Gegenstands zur vorliegenden Erfindung gehörend, sind die folgenden Punkte.

Die in den Punkten 1-37 beschriebenen Ausführungsformen, die nicht durch die Ansprüche abgedeckt sind, dienen lediglich der Veranschaulichung des technischen Kontextes der vorliegenden Erfindung. Insbesondere die Punkte 19-37 sind nicht erfindungsgemäß.

### Punkt 1:

Lack zum Beschichten von Oberflächen, der ein Polymer enthält, umfassend ein Basispolymer und Modifizierungseinheiten, die nach Aushärtung des Polymers mit dem Basispolymer unverträglich sind.

### Punkt 2:

Lack nach Punkt 1, **dadurch gekennzeichnet,** dass nach Aushärtung des Polymers an der Oberfläche des ausgehärteten Lacks separate Bereiche vorliegen.

### Punkt 3:

Lack nach Punkt 1 oder 2, **dadurch gekennzeichnet,** dass die Modifizierungseinheiten langkettige Polysiloxane, bevorzugt Polydialkylsiloxane sind.

### Punkt 4:

Lack nach Punkt 3, **dadurch gekennzeichnet,** dass das Polysiloxan von 20 bis 500 Si-Einheiten aufweist.

### Punkt 5:

Lack nach einem der vorhergehenden Punkte, **dadurch gekennzeichnet,** dass das Basispolymer aus der Gruppe bestehend aus Polyamidimiden, Polyesterimiden, Polyurethanen, Polyestern, Polyamiden, Polyimiden, Polyesteramidimiden, Polyepoxiden, Mischungen oder Kombinationen davon ausgewählt ist.

### Punkt 6:

Lack nach Punkt 5, **dadurch gekennzeichnet,** dass das Basispolymer ein Polyamidimid ist.

### Punkt 7:

Lack nach einem der vorhergehenden Punkte, **dadurch gekennzeichnet,** dass der Anteil der Bausteine mit Modifizierungseinheiten 2-70 Massen-% bezogen auf das gesamte Polymer beträgt.

### Punkt 8:

Ausgehärteter Lack erhältlich durch thermisches Aushärten eines Lacks nach einem der Punkte 1 bis 7, wobei an der Oberfläche des ausgehärteten Lacks separate Bereiche vorliegen.

### Punkt 9:

Verfahren zur Herstellung eines Lacks nach einem der Punkte 1 bis 7, **dadurch gekennzeichnet,** dass ein erster modifizierter Baustein, z.B. ein Monomer oder ein Präpolymer, mit mindestens einer Modifizierungseinheit mit mindestens einem zweiten Monomer polymerisiert wird, um ein Polymer mit Modifizierungseinheiten zu erhalten, das zusammen mit einem Lösungsmittel und gegebenenfalls Additiven zu einem Lack formuliert wird.

### Punkt 10:

Verfahren nach Punkt 9, **dadurch gekennzeichnet,** dass ein Diisocyanat mit einem Polysiloxan mit reaktionsfähigen Gruppen umgesetzt wird und das Reaktionsprodukt anschließend mit einem Säureanhydrid polymerisiert wird.

### Punkt 11:

Verfahren zur Herstellung einer beschichteten Oberfläche, **dadurch gekennzeichnet,** dass ein erster modifizierter Baustein, z.B. ein Monomer oder ein Präpolymer, mit mindestens einer Modifizierungseinheit mit mindestens einem zweiten Monomer polymerisiert wird, um ein Polymer mit Modifizierungseinheiten zu erhalten, das zusammen mit einem Lösungsmittel und gegebenenfalls Additiven zu einem Lack formuliert wird und der Lack auf eine Oberfläche aufgebracht wird und einem Einbrennprozess unterzogen wird, wobei an der Oberfläche des ausgehärteten Lacks separate Bereiche vorliegen.

### Punkt 12:

Verwendung des Lacks nach einem der Punkte 1 bis 7 als anti-Haft- und/oder anti-Fouling-Beschichtung von Oberflächen.

### Punkt 13:

Verwendung nach Punkt 12 auf einer metallischen oder nichtmetallischen Oberfläche.

### Punkt 14:

Verwendung nach Punkt 12 als Beschichtung in Gleitlagern oder/und für Umlenkrollen für Gurte und Seile.

### Punkt 15:

Verwendung nach einem der Punkte 12 bis 14, **dadurch gekennzeichnet,** dass der Lack als äußere Schicht oder Schichten auf eine Oberfläche aufgetragen wird, die mit einer oder mehreren Lackschichten überzogen ist.

### Punkt 16:

Verwendung nach Punkt 12 als Anti-Fouling-Beschichtung oder/und Fouling-Release-Beschichtung auf einem Schiffsrumpf.

### Punkt 17:

Verwendung des Lacks nach einem der Punkte 1 bis 7 als Elektroisolierlack zum Auftragen auf einen Draht.

### Punkt 18:

Verwendung eines Polymers, umfassend ein Basispolymer und Modifizierungseinheiten, die nach Aushärtung des Polymers mit dem Basispolymer unverträglich sind, als Bestandteil eines Lacks.

### Punkt 19:

Lack zum Beschichten von Oberflächen, umfassend ein Polymer und Polysiloxan-Gelpartikel.

### Punkt 20:

Lack nach Punkt 19, **dadurch gekennzeichnet,** dass nach Aushärtung des Polymers an der Oberfläche des ausgehärteten Lacks separate Bereiche vorliegen.

### Punkt 21:

Lack nach Punkt 19 oder 20, umfassend Polydialkylsiloxan-Gelpartikel, insbesondere Polydimethylsiloxan-Gelpartikel.

### Punkt 22:

Lack nach einem der Punkte 19 bis 21, **dadurch gekennzeichnet,** dass das Polymer aus der Gruppe bestehend aus Polyamidimiden, Polyesterimiden, Polyurethanen, Polyestern, Polyamiden, Polyimiden, Polyesteramidimiden, Polyepoxiden, Mischungen oder Kombinationen davon ausgewählt ist.

### Punkt 23:

Lack nach Punkt 22, **dadurch gekennzeichnet,** dass das Polymer ein Polyamidimid ist.

### Punkt 24:

Ausgehärteter Lack, erhältlich durch thermisches Aushärten eines Lackes nach einem der Punkte 19 bis 23.

### Punkt 25:

Verfahren zur Herstellung eines Lackes nach einem der Punkte 19 bis 23, **dadurch gekennzeichnet,** dass eine Polysiloxan-Gelpartikel-Dispersion und ein ein Polymer enthaltender Lack gemischt werden.

### Punkt 26:

Verfahren nach Punkt 25, **dadurch gekennzeichnet,** dass es sich bei dem ein Polymer enthaltenden Lack um einen herkömmlichen Lack oder um einen Lack nach einem der Punkte 1 bis 7 handelt.

### Punkt 27:

Polysiloxan-Gelpartikel-Dispersion, umfassend Polysiloxan-Gelpartikel in einem Dispersionsmittel.

### Punkt 28:

Polysiloxan-Gelpartikel-Dispersion nach Punkt 27, **dadurch gekennzeichnet,** dass sie Polydialkylsiloxan-Gelpartikel, insbesondere Polydimethylsiloxan-Gelpartikel umfasst.

### Punkt 29:

Polysiloxan-Gelpartikel-Dispersion nach Punkt 27 oder 28, **dadurch gekennzeichnet,** dass das Dispersionsmittel ausgewählt ist aus N-Methylpyrrolidon, N-Ethylpyrrolidon, Dimethylpyrrolidon, Dimethylacetamid, Dimethylformamid, Wasser oder/und Dimethylsulfoxid.

### Punkt 30:

Verfahren zur Herstellung einer Polysiloxan-Gelpartikel-Dispersion nach einem der Punkte 27 bis 29, **dadurch gekennzeichnet,** dass Vinyl-funktionelle Polysiloxane mit Hydrid-funktionellen Siloxanen in einer Hydrosilylierungsreaktion in einem Dispergiermittel umgesetzt werden.

### Punkt 31:

Verwendung eines Lackes nach einem der Punkte 19 bis 23 als Anti-Haft- und/oder Anti-Fouling-Beschichtung von Oberflächen.

### Punkt 32:

Verwendung nach Punkt 31 auf einer metallischen oder nicht metallischen Oberfläche.

### Punkt 33:

Verwendung nach Punkt 31 als Beschichtung in Gleitlagern oder/und für Umlenkrollen für Gurte und Seile.

### Punkt 34:

Verwendung nach einem der Punkte 31 bis 33, **dadurch gekennzeichnet,** dass der Lack als äußere Schicht oder Schichten auf eine Oberfläche aufgetragen wird, die mit einer oder mehreren Lackschichten überzogen ist.

### Punkt 35:

Verwendung nach Punkt 31 als Anti-Fouling-Beschichtung auf einem Schiffsrumpf.

### Punkt 36:

Verwendung des Lackes nach einem der Punkte 19 bis 23 als Elektroisolierlack zum Auftragen auf einen Draht.

### Punkt 37:

Verwendung von Polysiloxan-Gelpartikeln als Bestandteil eines Lackes. Die Erfindung wird nachfolgend anhand bevorzugter Ausführungsbeispiele und Figuren, die den Schutzbereich der Erfindung jedoch nicht einschränken sollen, erläutert.

### Figuren

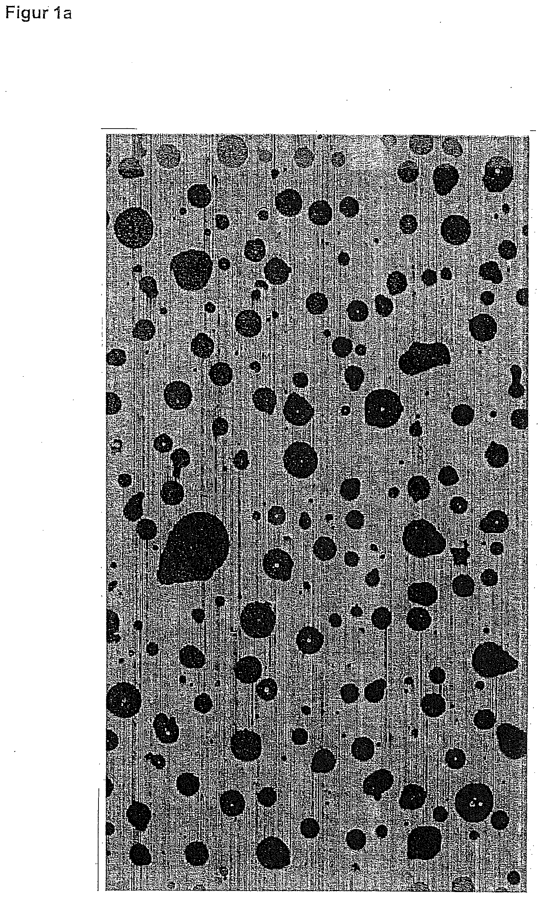

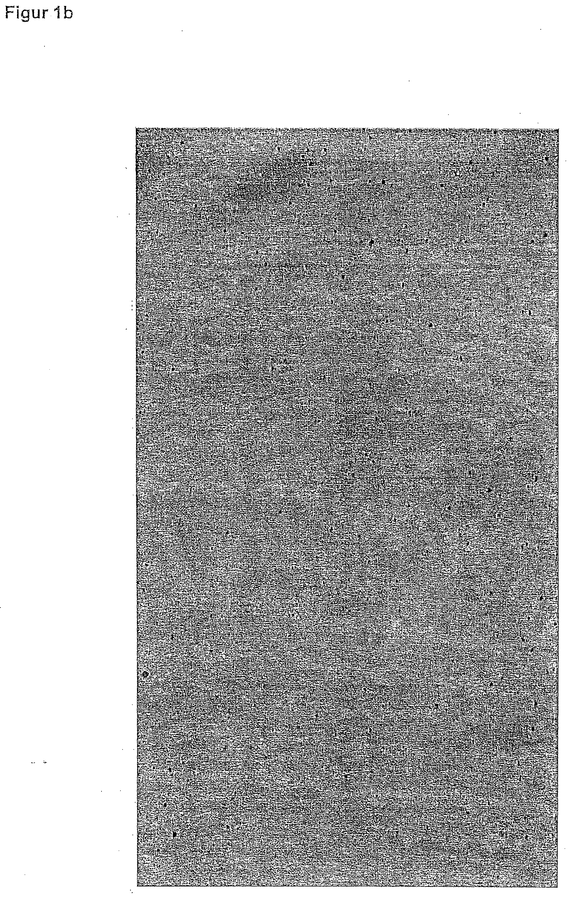

Die Phasentrennung der Basispolymere und der Modifizierungseinheiten an der Oberfläche des Lacks wird anhand der Figuren 1a und 1b deutlich.
**Figur 1a** zeigt eine Rasterkraftmikroskopaufnahme der Oberfläche des erfindungsgemäßen Lacks auf Basis eines Polyamidimid-polydimethylsiloxan-Blockcopolymers, wobei die Polydimethylsiloxane ca. 63 Si-Einheiten aufweisen. Der Lack ist auf einem Metallplättchen aufgetragen.
   Eine deutliche Phasentrennung zwischen den Modifizierungseinheiten, die als dunkle Blasen zu erkennen sind, und dem Polymer ist auf der Oberfläche des Lacks zu erkennen.
**Figur 1b** zeigt eine Rasterkraftmikroskopaufnahme der Oberfläche eines Lacks auf Basis eines Polyamidimid-polydimethylsiloxan-Blockcopolymers, wobei die Polydimethylsiloxane ca. 10 Si-Einheiten aufweist. Der Lack ist auf einem Metallplättchen aufgetragen.
   Ein deutliche Phasentrennung zwischen dem Polymer und den Modifizierungseinheiten ist nicht sichtbar.
   Der Vergleich zwischen der Figur 1a, wobei ein Polydialkylsiloxan mit einer Kettenlänge von 63 Si-Einheiten und der Figur 1b, wobei ein Polydialkylsiloxan mit einer deutlich kürzeren Kettenlänge von 10 Si-Einheiten verwendet wurde, zeigt deutlich, dass eine Phasentrennung nur für Modifizierungseinheiten gemäß der vorliegenden Erfindung auftritt.
**Figuren 2a****-g** zeigen für den erfindungsgemäßen Lack geeignete Polydimethylsiloxane.
**Figuren 3a****-d** zeigen verschiedene Ausführungsformen für die erfindungsgemäßen Polymere.
**Figur 4** zeigt eine mit einem erfindungsgemäßen Lacksystem beschichtete Tafel, die in Wilhelmshaven in der Nordsee ausgelagert wurde. "Start" **(****Figur 4a****)** zeigt die Tafel vor Einbringen in das Wasser, "nach 1 Monat" **(****Figur 4b****)** zeigt die Tafel nach einem Monat und "nach Reinigung" **(****Figur 4c****)** zeigt die Tafel nach Reinigung der unteren Hälfte mit einer Malerrolle.
**Figur 5** zeigt eine mit einem erfindungsgemäßen Lacksystem beschichtete Tafel nach zwei Monaten in der Nordsee **(****Figur 5a****)** sowie nach Reinigung der unteren Hälfte mit einer Malerrolle **(****Figur 5b****).**
**Figur 6** zeigt eine Referenzplatte nach Einbringen in die Nordsee, nach einem bzw. nach zwei Monaten und jeweils nach Reinigung.

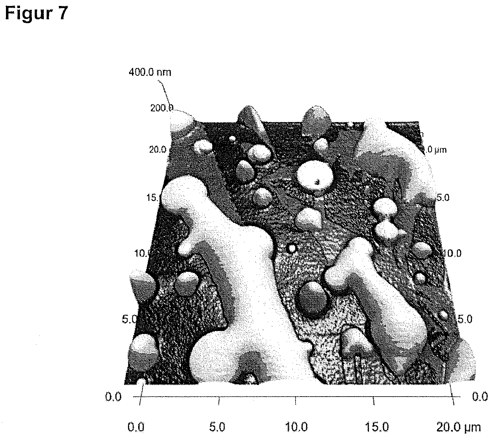

**Figur 7** zeigt eine Rasterkraftmikroskopie in D3-Aufnahme der Oberfläche einer Beschichtung eines funktionell mit einem Polydimethylsiloxan modifizierten Polyamidimid. Die hell dargestellten Bereiche sind mobile, aber fixierte Siloxan-Segmente.

### Beispiele

### Beispiel 1

### Herstellung eines Polyamidimids mit einem 20 %-igen Anteil an α-(2,2-Dimethylolbutoxy)-propyl-ω-n-butylpolydimethylsiloxanfunktionalisiertem Polymer (modifiziertes linkerverknüpftes Polymer)

In einen Laborreaktor aus Glas mit 2 I Gesamtvolumen, ausgestattet mit einer elektrischen Widerstandheizung mit Temperaturkontrolle und -steuerung, mit einem Rührer und einem Rückflusskühler und der Einleitung von Schutzgas (Stickstoff), werden 300,0 g N-Methylpyrrolidon (NMP) und 250,0 g Xylol - als Prozesslösungsmittel - und 293,5 g 4,4'-Diisocyanatodiphenylmethan (MDI) eingewogen und die Reaktionsmischung wird leicht erwärmt. Das MDI wird bei 45 °C im vorgelegten Lösungsmittel gelöst. Dann werden 104,0 g des α-(2,2-Dimethylolbutoxy)-propyl-ω-n-butylpolydimethylsiloxan, das ca. 63 Si-Einheiten aufweist, über einen Zeitraum von 15 Minuten zudosiert, die Temperatur wird dabei bei 45 °C gehalten. Dann wird das Reaktionsgut auf 70 °C erwärmt und es wird eine Stunde bei 70 °C gerührt. Dann wird auf 45 °C abgekühlt und es werden 218,0 g Trimellithsäureanhydrid (TMA) zugegeben. Dann wird eine Stunde bei 45 bis 50 °C gerührt. Danach wird die Temperatur unter Rühren in Stufen gesteigert: 30 Minuten bei 65 °C, dann 30 Minuten bei 75 °C, dann 60 Minuten bei 85 °C, dann 60 Minuten bei 100 °C, und schließlich 60 Minuten bei 130 bis 140 °C. Dabei spaltet sich das Reaktionsprodukt Kohlensäure aus Carboxylgruppen und Isocyanat ab. Das Reaktionsgut erreicht eine Viskosität (gemessen an einer Probe im Platte-Kegel-Viskosimeter bei 30 °C) von 6 Pa·s. Es wird auf unter 60 °C gekühlt und 6,1 g Ethanol zugegeben, um die Reaktion abzufangen. Die entstandene kolloidale Lösung hat einen Festkörpergehalt von 48 % (gemessen bei 1^{h} 130 °C im Umluftofen). Der Anteil an unverträglichem Polydimethylsiloxan beträgt 20 Massen-%, bezogen auf das gesamte Polymer (Festkörper).

### Vergleichsbeispiel (VB):

### Herstellung eines Polyamidimids ohne Modifizierungseinheiten

Es wird genauso verfahren wie unter Beispiel 1 beschrieben, aber ohne die Zugabe des unverträglichen Polydimethylsiloxans. In den beschriebenen Laborreaktor werden 300,0 g NMP und 250,0 g Xylol als Prozesslösungsmittel eingewogen und es werden 293,5 g 4,4'-Diisocyanatodiphenylmethan bei 45 °C darin gelöst. Dann werden 223,1 g TMA zugegeben. Dann wird eine Stunde bei 45 bis 50 °C gerührt. Danach wird die Temperatur unter Rühren in Stufen gesteigert: 30 Minuten bei 45 °C, dann 30 Minuten bei 75 °C, dann 60 Minuten bei 85 °C, dann 60 Minuten bei 100 °C und schließlich 60 Minuten bei 130 bis 140 °C. Dabei spaltet sich das Reaktionsprodukt Kohlensäure aus Carboxylgruppen und Isocyanat ab. Das Reaktionsgut erreicht eine Viskosität (gemessen an einer Probe im Platte-Kegel-Viskosimeter bei 30 °C) von 6 Pa·s. Es wird auf unter 60 °C gekühlt. Die entstandene kolloidale Lösung hat einen Festkörpergehalt von 42,9 % (gemessen bei 1^{h} 130 °C im Umluftofen).

### Beispiel 2

### Herstellung eines Polyamidimids mit 20 %-igem Anteil an α-(2,2-Dimethylolbutoxy)-propyl-ω-n-Butylpolydimethylsiloxanfunktionalisiertem Polymer (modifiziertes linkerverknüpftes Polymer)

Es wird genauso verfahren wie unter Beispiel 1 beschrieben. Die Einwaagemengen sind in Tabelle 1 aufgeführt.

### Beispiel 3

### Herstellung eines Polyamidimids mit 5 %-igem Anteil an α-(2,2-Dimethylolbutoxy)-propyl-ω-n-Butylpolyd imethylsiloxanfunktionalisiertem Polymer (modifiziertes linkerverknüpftes Polymer)

Es wird genauso verfahren wie unter Beispiel 1 beschrieben. Die Einwaagemengen sind in Tabelle 1 aufgeführt.

### Beispiel 4

### Herstellung eines Polyamidimids mit 20 %-igem Anteil an Aminopropylpolydimethylsiloxan-funktionalisiertem Polymer (Polydialkylsiloxan mit daran verknüpfte Einheiten des Basispolymers)

In die unter Beispiel 1 beschriebene Apparatur werden 547,6 g NMP und 228,0 g TMA eingewogen. Das TMA wird unter Rühren bei 70 °C gelöst. Dann werden 102,5 g eines Aminopropylpolydimethylsiloxans, das ca. 65 Si-Einheiten aufweist, innerhalb von 15 Minuten zudosiert. Es wird auf 120 °C erwärmt und dann 1 Stunde bei 120 °C gehalten, damit das Polydimethylsiloxan abreagieren kann. Es wird dann auf 40 °C abgekühlt und dann werden innerhalb einer Stunde 280,0 g MDI zugegeben. Es wird innerhalb von 2 Stunden auf 85 °C erwärmt und danach auf 130 °C, bis eine Viskosität von 6 Pa·s (gemessen im Platte-Kegel-Viskosimeter bei 30 °C) erreicht wird. Dann wird die Reaktionsmischung abgekühlt. Das entstehende Produkt hat einen Festkörpergehalt von 46,9 % (gemessen bei 1^{h} 130 °C im Umluftofen).

### Beispiel 5

### Herstellung eines Polyamidimids mit 20 %-igem Anteil an 2-Hydroxyethoxypropylpolydimethylsiloxan-funktionalisiertem Polymer (das Polydimethylsiloxan weist ca. 132 Si-Einheiten auf, Kettenenden-modifiziertes Polymer)

Es wird genauso verfahren, wie unter Beispiel 1 beschrieben. Die Einwaagemengen sind in der Tabelle 1 aufgeführt.

**Tabelle 1**

| **Beispiele für Polyamidimide mit Modifizierungseinheiten und Vergleichsbeispiel** | | | | | | |
|---|---|---|---|---|---|---|
| **Bestandteile [g]** | **B1** | **B2** | **B3** | **B4** | **B5** | **VB** |
| N-Methylpyrrolidon (NMP) | 300,0 | 300,0 | 300,0 | 547,6 | 300,0 | 300,0 |
| Xylol | 250,0 | 250,0 | 250,0 | -- | 250,0 | 250,0 |
| 4,4'-Diisocyanatodiphenylmethan (MDI) | 293,5 | 293,5 | 293,5 | 270,0 | 293,5 | 146,8 |
| Trimellithsäureanhydrid (TMA) | 218,0 | 218,0 | 218,0 | 228,0 | 224,0 | 111,6 |
| α-(2,2-Dimethylolbutoxy)-propyl-ω-n-butylpolydimethylsiloxan | 104,0 | 46,0 | 22,0 | -- | -- | -- |
| Aminopropylpolydimethylsiloxan | -- | -- | -- | 102,1 | -- | -- |
| 2-Hydroxyethoxypropylpolydimethylsiloxan | -- | -- | -- | -- | 105,0 | - |
| NMP | -- | -- | -- | 33,1 | -- | -- |
| Ethanol | 6,1 | 6,1 | 6,1 | 6,1 | 6,1 | -- |
| Abgespaltenes CO₂ | 101,4 | 102,4 | 102,85 | 93,7 | 102,8 | 103,2 |
| Summe | 1070,2 | 1011,2 | 986,7 | 1093,6 | 1075,2 | 963,4 |
| Festkörper [%] (1h 130 °C) | 48,6 | 45,6 | 44,3 | 46,9 | 48,3 | 42,9 |
| Anteil an Polymer mit Modifizierungseinheiten [%] | 20 | 10 | 5 | 20 | 20 | - |

### Beispiele 6-11

### Elektroisolierlacke

Aus den in den Beispielen 1-5 und in dem Vergleichsbeispiel beschriebenen Polymerlösungen wurden durch Zugabe von Lösungsmitteln Elektroisolierlacke hergestellt. Die Zusammensetzung der Elektroisolierlacke ist in Tabelle 2 dargestellt. Beispiel B10 ist hierbei erfindungsgemäß.

**Tabelle 2**

| **Elektroisolierlacke** | | | | | | | |
|---|---|---|---|---|---|---|---|
| **Bestandteil [g]** | **Anzahl Si-Einheiten in der Polydimethylsiloxankette** | **B6** | **B7** | **B8** | **B9** | **B10** | **B11** |
| Polymer Bspl. 1 (20 % Modifikation) | ca. 63 | 488,8 | -- | -- | -- | 244,4 | -- |
| Polymer Bspl. 2 (10 % Modifikation) | ca. 63 | -- | 502,8 | -- | -- | -- | -- |
| Polymer Bspl. 3 (5% Modifikation) | ca. 63 | -- | -- | 488,8 | -- | -- | -- |
| Polymer Bspl. 4 (20 % Modifikation) | ca. 65 | -- | -- | -- | 502,8 | -- | -- |
| Polymer Bspl. 5 (20 % Modifikation) | ca. 132 | -- | -- | -- | -- | 244,4 | -- |
| Polymer Vergleichsbeispiel | -- | -- | -- | -- | -- | -- | 502,8 |
| N-Methylpyrrolidon | | 156,2 | 119,8 | 98,5 | 617,5 | 118,4 | 82,9 |
| N,N-Dimethylacetamid | | 32,3 | 31,2 | 29,4 | 56,1 | 30,4 | 29,3 |
| Summe | | 677,4 | 653,8 | 616,7 | 1176,4 | 637,6 | 615,0 |
| Festkörper [%] (60' 130 °C) | | 35,1 | 35,1 | 35,1 | 20,0 | 35,1 | 35,1 |
| Viskosität [mPa·s] (Platte-Kegel-Viskosität) | | 710 | 860 | 780 | 350 | 660 | 830 |

### Applikationen der Elektroisolierlacke

Die in Tabelle 2 angegebenen Elektroisolierlacke wurden auf einer horizontal arbeitenden Drahtlackiermaschine mit einer Umlufttemperatur von maximal 605 °C lackiert. Der Blankdrahtdurchmesser betrug 0,53 mm, die Abzugsgeschwindigkeit 122 m/min. Der Auftrag erfolgte über Tauchungen mit Abstreifdüsen. Es gab insgesamt 10 Durchzüge. Der Auftrag der ersten 7 Durchzüge bestand aus einem handelsüblichen Polyesterimidelektroisolierlack mit einer Düsenfolge von 560/570/570/580/580/590/590 µm. Die folgenden 2 Aufträge bestanden aus einem handelsüblichen Polyamidimidelektroisolierlack mit einer Düsenfolge von 590/600 µm. Der letzte Auftrag bestand aus dem erfindungsgemäßen Isolierlack gemäß den Beispiele 6-10 bzw. aus dem Lack des Vergleichsbeispiels gemäß Beispiel 11 mit einer Düse von 610 µm Öffnungsdurchmesser.

### Prüfung der Gleitfähigkeit

Neben der Prüfung der Wärmebeständigkeit und elektrischen Eigenschaften wurde die Gleitfähigkeit nach zwei Methoden bestimmt.

### 1. Messung des Oberflächenwiderstands nach Parusell CoF

Bei der Messung des Oberflächenwiderstandes nach Parusell CoF wird ein Lackdraht zwischen einer polierten Stahlfläche und einem aufliegenden Stahlschlitten durchgeführt. Gemessen wird die Kraft, die auf den Stahlschlitten wirkt. Die Angabe erfolgt als Reibungskoeffizient (dimensionslos). Kleine Werte des Reibungskoeffizienten bedeuten geringe Reibung (Tensiometrie, siehe DIN EN 60851).

### 2. Messung des Reibungswiderstands nach Scintilla

Ein Lackdraht wird mit hoher Geschwindigkeit unter einem Stahlblock mit bestimmter Auflagefläche durchgezogen. Es wird die Kraft gemessen, die durch die Reibung erzeugt wird. Angabe in Newton (N).

Tabelle 3 zeigt die Messergebnisse an den lackierten Drähten und am Lackdraht mit dem Vergleichsbeispiel.

**Tabelle 3**

| **Messergebnisse Oberflächenwiderstände und Reibungswiderstände** | | | | | | |
|---|---|---|---|---|---|---|
| **Messmethode/ Beispiel** | **B6** | **B7** | **B8** | **B9** | **B10** | **B11** |
| Anzahl Si-Einheiten | ca. 63 | ca. 63 | ca. 63 | ca. 65 | ca. 132 | - |
| Parusell CoF (DIN EN 60851) | 0,120 | 0,130 | 0,210 | 0,132 | 0,099 | 0,230 |
| Scintilla [N] | 5,50 | 6,50 | 7,00 | 5,50 | 5,50 | 14,00 |

Die in Tabelle 3 gezeigten Messergebnisse zeigen den Vorteil des erfindungsgemäßen Lacks (B6-B10) gegenüber einem Lack ohne Modifizierungseinheiten (B11). Je höher der Anteil der Modifizierungseinheiten im Polymer ist (vgl. B6 20 %, B7 10 %, B8 5%), desto geringer ist der Reibungskoeffizient und der Reibungswiderstand. Ein besonders niedriger Reibungskoeffizient wird durch das Mischen in einem Massenverhältnis von 50:50 zweier Polymere mit Modifizierungseinheiten, die eine unterschiedliche Anzahl von Si-Einheiten aufweisen, erzielt (siehe B10).

### Beispiel 12 (Referenzbeispiel)

### Herstellung eines mit Polydimethylsiloxan modifizierten Polyesterimids (PDMS)

Als Reaktionsgefäß wird ein Laborreaktor (V4A, Glas) mit indirekter Heizung (z.B. Wärmeträgeröl) oder regelbarer, elektrischer Widerstandsheizung, Produkttemperaturkontrolle, Schutzgaseinleitung, möglichst randgängigem, stufenlos regelbarem Rührer, Füllkörperkolonne mit Kopftemperaturmessung, Brücke und absteigendem Rückflusskühler (alles Destillat auffangen) eingesetzt. Die Kolonne wird als Dephlegmator gefahren.
Die Gesamtmenge an Polyolen (THEIC oder Glycerin, Ethylenglykol), Dimethylterephthalat und 0,3 % (bezogen auf die Ausbeutemenge des gesamten Polyesterimids = nfA) Butyltitanat werden in der genannten Reihenfolge eingewogen (siehe auch Rezeptur in Tabelle 4). Anschließend wird Schleppmittel zugeben: ca. 3 % auf Gesamteinwaage an Solvesso 150. Beginn der Einleitung von Schutzgas (am besten Stickstoff, aber auch Kohlendioxid oder dessen Gemisch mit N₂ verwendbar).
Das Reaktionsgemisch wird zügig aufgeheizt auf ca. 160°C. Dann wird die Temperatur kontinuierlich über 5 Stunden auf max. 240°C gesteigert. Das Zeitmaß wird vom Destillationsprozess bestimmt, die Kolonnenkopftemperatur sollte 75°C nicht übersteigen (etwas oberhalb des Siedepunkts von Methanol, 64,7°C). Das abdestillierte Methanol wird aufgefangen und dessen Menge bestimmen (Dichte bei 20°C = 0,7869). Das Reaktionsgemisch wird bei 240°C gehalten, bis kein Methanol mehr anfällt. Dann wird auf auf unter 140°C abgekühlt.
Anschließend wird aminfunktionelles Polydimethylsiloxan zugegeben. Trimellithsäureanhydrid und 4,4'-Diaminodiphenylmethan wird als Feststoffgemisch, mindestens aber in wechselnden Portionen zugegeben. Dann wird vorsichtig wieder aufgeheizt. Die Diimidcarbonsäure bildet sich spontan und fällt dabei aus. Es wird so viel Solvesso 150 zugegeben, bis die Dispersion gut rührbar ist.

Dann wird zunächst langsam auf bis zu 240°C aufgeheizt. Das Zeitmaß wird vom Destillationsprozess bestimmt, die Kolonne sollte nicht ertrinken und die Kolonnenkopftemperatur sollte 105°C nicht übersteigen (etwas oberhalb des Siedepunkts von Wasser).

Ab 200°C werden Proben für die Messung von Säurezahl und Viskosität gewonnen. Die Titration der Säurezahl erfolgt mit 0,5 molarer, alkoholischer KOH gegen Phenolphtalein an einer Probe gelöst in vorneutralisiertem Lösemittel [DIN 53169]. Die Bestimmung der dynamischen Viskosität wird mit einer Probe nfA 60 % in Lösemittel durchgeführt.

Das Reaktionsgemisch wird bei 220°C gehalten, bis Säurezahl unter 20 mg KOH/g liegt.

Dann wird der Laborreaktor auf kurzen Weg geschaltet (absteigende Destillationsbrücke, am besten mit Bestimmung der Destillationstemperatur) und Schleppmittel und restliches Wasser abdestilliert. Es wird bei 220°C gehalten, bis die geplanten Kennzahlen erreicht sind.

Dann wird stark auf unter 170°C abgekühlt und ca. 5 - 10 % der geplanten Lösemittelmenge zugegeben und angelöst und weiter gekühlt. Unter 130°C wird Inhalt des Laborreaktors ausgetragen und in der Hauptmenge des Lösemittel weiter gelöst.

| | |
|---|---|
| Einzustellende Endkennzahlen: | nfA (60 min. 130°C): 70,0 ± 1,0 % |
| | SZ (fest): 5 - 15 mg KOH/g |
| | Viskosität (dyn.): _ ± 50 mPa·s (originale Anlösung, 23°C) |

**Tabelle 4**

| **Rezeptur:** | | |
|---|---|---|
| **Bestandteile [g]** | | **Einwaagen [g]:** |
| Dimethylterephthalat | | **64,02** |
| Trimellithsäureanhydrid | | **84,48** |
| N,N'-Diaminodiphenylmethan | | **43,56** |
| Trishydroxyethylisocyanurat (THEIC) | | **96,18** |
| Glycerin | | **0,00** |
| Ethylenglykol | | **21,48** |
| Modifizierer: Aminfunktionelles PDMS z.B.: Aldrich: 480304 Poly[Dimethylsiloxane-co-(3-aminopropyl)methylsiloxane | | **30,86** |

| **Katalysatoren und Lösungsittel:** | | |
|---|---|---|
| Butyltitanat | | **0,99** |
| Solvanol PCA (oder Kresole/Phenole)bzw. Xylol | | **9,90** |
| Solvesso 150 | | **9,90** |
| **Summe, Einwaage Polymerbausteine** | | **340,58** |
| **Summe Methanol Freisetzung** | | 7,69 |
| **Summe H₂O Freisetzung** | | 2,88 |
| Modifikationsanteil [%] | | 10% |

### Beispiel 13 (Referenzbeispiel)

### Herstellung eines Polyamidimids mit einem 5%igen Anteil an Aminopropylmethylsiloxan-dimethylsiloxan-copolymer-Modifier

### PDMS-Modifier:

| **Code (ABCR)** | **Viskosität** | **Molekulargewicht [g/mol]** | **Mole % (Aminopropyl) MeSiO** |
|---|---|---|---|
| AMS-132 | 80-100 | 4500-5500 | 2,0-3,0 |
| AMS-152 | 120-180 | 7000-8000 | 4,0-5,0 |
| AMS-162 | 80-120 | 4000-5000 | 6,0-7,0 |

| | | | |
|---|---|---|---|
| AMS-132: (2-3% Aminopropylmethylsiloxan)-dimethylsiloxan-copolymer AMS-152: (4-5% Aminopropylmethylsiloxan)-dimethylsiloxan-copolymer AMS-162: (6-7% Aminopropylmethylsiloxan)-dimethylsiloxan-copolymer | | | |

In einem Laborreaktor aus Glas mit 0,5 L Gesamtvolumen, ausgestattet mit einer elektrischen Widerstandsheizung mit Temperaturkontrolle und -steuerung, mit einem Rührer und einem Rückflusskühler und der Einleitung von Stickstoff, werden 100g NMP, 50g Xylol und 45,6g Trimellithsäureanhydrid (TMA) eingewogen. Das TMA wird unter Rühren bei 70°C gelöst. Dann werden 4,6g des PDMS-Modifiers, der ca. 70-100 Si-Einheiten aufweist, innerhalb von 15min zudosiert.. Es wird auf 120°C erwärmt und dann eine Stunde bei 120°C gehalten zur Abreaktion des PDMS-Anteils. Es wird dann auf 40°C abgekühlt und dann werden innerhalb einer Stunde 58,7 g MDI zugegeben. Es wird innerhalb zwei Stunden auf 85°C erwärmt, und danach auf 130°C bis eine Viskosität von 5 Pa·s (gemessen im Platte-Kegel-Viskosimeter bei 30°C) erreicht wird. Dann wird abgekühlt bis 70°C und durch Zugabe von 1,2g Ethanol werden die noch freien Isocyanatfunktionen umgesetzt. Das entstehende Produkt hat einen Festkörper von 47-51 % (gemessen bei 1^{h} 130°C im Umluftofen): AMS-132: 51% FK; AMS-152: 47% FK; AMS-162: 48 % FK

### Applikation und Einbrennbedingungen:

Das mit AMS-132 funktionalisierte PAI wurde durch Zugabe von NMP auf einen FK von 40% eingestellt, mit 200µm appliziert, bei 220°C für 10min eingebrannt.

Das beschichtete Blech wurde am IFAM getestet.

### Beispiel 14 (Referenzbeispiel)

### Herstellung der wässrigen PUR-Dispersionen mit einem 5%igen Anteil an (2-3% Aminopropylmethylsiloxan)-dimethylsiloxan-copolymer als Modifier

### 14.1.

In einer wie unter Beispiel 13 beschriebenen Reaktionsapparatur werden 36,15g MDI in 74g Butanon bei 82°C gelöst. Danach werden 41,27g Priplast 1838, 1,43g Neopentylglykol (NPG), 6,46g Dimethanolpropionsäure (DMPA) und 7,93g Cyclohexyldimethanol (CHDM) nacheinander zugegeben und dieses Reaktionsgemisch wird 3h bei 82°C zur Reaktion gebracht. Nach Abkühlen auf Raumtemperatur wird 4,66g des Modifier AMS-132 über 15 min zugetropft. Nach weiteren 15min Rühren bei 50°C wird 1,77g Butanol zugegeben und für 30min bei 82°C gehalten. Nach Zugabe von 2,14g Dimethylethylethanolamin (DMEA) über 5min wird für weitere 30min bei 82°C gerührt. Nach Abkühlen auf 65°C wird 9,64g Butylglykol hinzugefügt und für 30 min gerührt. Danach erfolgt die Zugabe von 138,6g Wasser. Von der resultierenden Dispersion wird im Anschluss daran das Butanon am Rotationsverdampfer abdestilliert.

Das entstehende Produkt wird durch Zugabe von Wasser auf einen Festkörper von 40 % eingestellt (gemessen bei 1^{h} 130°C im Umluftofen). Die PUR-Dispersion wurden auf einen Festkörper von 25% FK eingestellt, mit 200µm Nassfilmdicke aufgerakelt und bei 100°C für 10min eingebrannt.

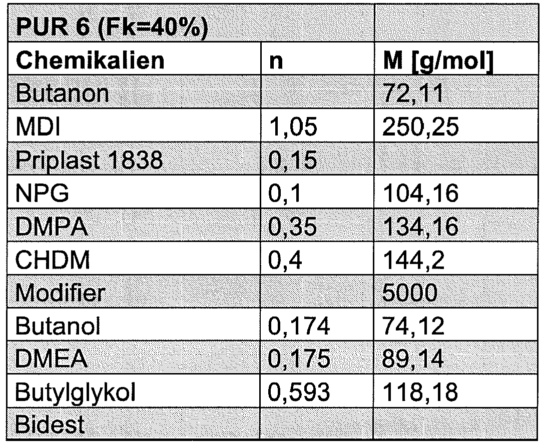

### 14.2.

In einer wie unter Beispiel 13 beschriebenen Reaktionsapparatur werden 52,55g MDI in 85,9g Butanon bei 82°C gelöst. Danach werden 40g Priplast 1838, 2,08g Neopentylglykol (NPG), 9,38g Dimethanolpropionsäure (DMPA) und 12,96g Cyclohexyldimethanol (CHDM) nacheinander zugegeben und dieses Reaktionsgemisch wird 3h bei 82°C zur Reaktion gebracht. Nach Abkühlen auf Raumtemperatur wird 6,13g des Modifier AMS-132 über 15 min zugetropft. Nach weiteren 15min Rühren bei 50°C wird 2,58g Butanol zugegeben und für 30min bei 82°C gehalten. Nach Zugabe von 3,12g Dimethylethylethanolamin (DMEA) über 5min wird für weitere 30min bei 82°C gerührt. Nach Abkühlen auf 65°C wird 14g Butylglykol hinzugefügt und für 30 min gerührt. Danach erfolgt die Zugabe von 176,6g Wasser. Von der resultierenden Dispersion wird im Anschluss daran das Butanon am Rotationsverdampfer abdestilliert.

Das entstehende Produkt wird durch Zugabe von Wasser auf einen Festkörper von 40 % eingestellt (gemessen bei 1^{h} 130°C im Umluftofen).

Die PUR-Dispersion wurden auf einen Festkörper von 30% FK eingestellt, mit 200µm Nassfilmdicke aufgerakelt und bei 100°C für 10min eingebrannt.

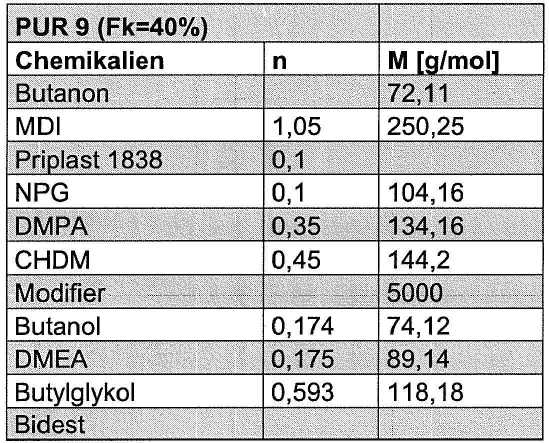

### 14.3.

In einer wie unter Beispiel 1) beschriebenen Reaktionsapparatur werden 52,55g MDI in 90g Butanon bei 82°C gelöst. Danach werden 30g Priplast 1838, 2,08g Neopentylglykol (NPG), 9,38g Dimethanolpropionsäure (DMPA) und 13,68g Cyclohexyldimethanol (CHDM) nacheinander zugegeben und dieses Reaktionsgemisch wird 3h bei 82°C zur Reaktion gebracht. Nach Abkühlen auf Raumtemperatur wird 5,66g des Modifier AMS-132 über 15 min zugetropft. Nach weiteren 15min Rühren bei 50°C wird 2,58g Butanol zugegeben und für 30min bei 82°C gehalten. Nach Zugabe von 3,12g Dimethylethylethanolamin (DMEA) über 5min wird für weitere 30min bei 82°C gerührt. Nach Abkühlen auf 65°C wird 14g Butylglykol hinzugefügt und für 30 min gerührt. Danach erfolgt die Zugabe von 164,4g Wasser. Von der resultierenden Dispersion wird im Anschluss daran das Butanon am Rotationsverdampfer abdestilliert.

Das entstehende Produkt wird durch Zugabe von Wasser auf einen Festkörper von 40 % eingestellt (gemessen bei 1^{h} 130°C im Umluftofen).

Die PUR-Dispersion wurden auf einen Festkörper von 30% FK eingestellt, mit 200µm Nassfilmdicke aufgerakelt und bei 100°C für 10min eingebrannt.

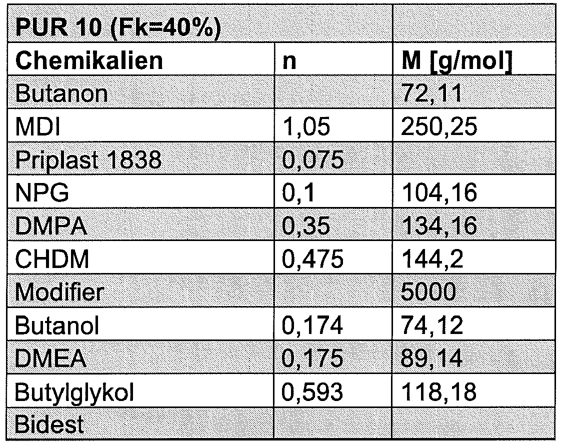

### Beispiel 15 (Referenzbeispiel)

### Versuch zur Fouling-Release-Wirksamkeit der Beschichtung in der Nordsee

Zwei Tafeln (Alu1 und Alu2) wurden mit dem Lacksystem beschichtet und in Wilhelmshaven in der Nordsee ausgelagert. Nach einem bzw. zwei Monaten wurden die untere Hälfte der Tafeln gereinigt mit einer Malerrolle, um die leichte Entfernbarkeit des Bewuchses zu prüfen. Zum Vergleich wurde eine parallel ausgelagerte Referenzprobe geprüft.

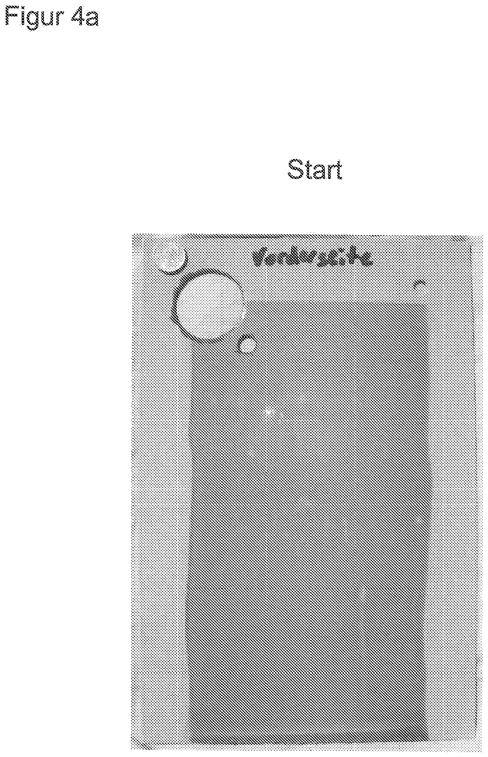

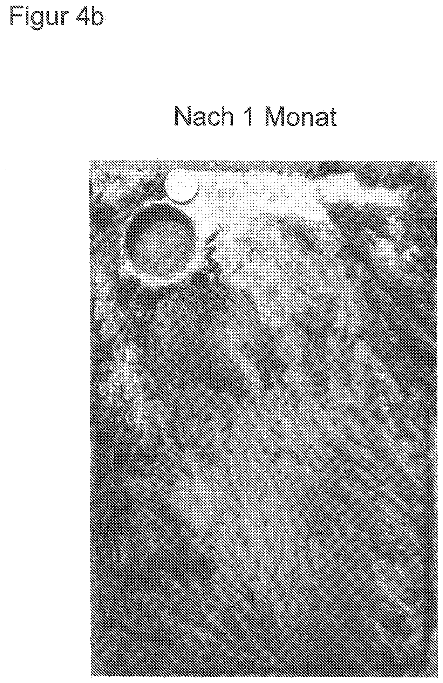

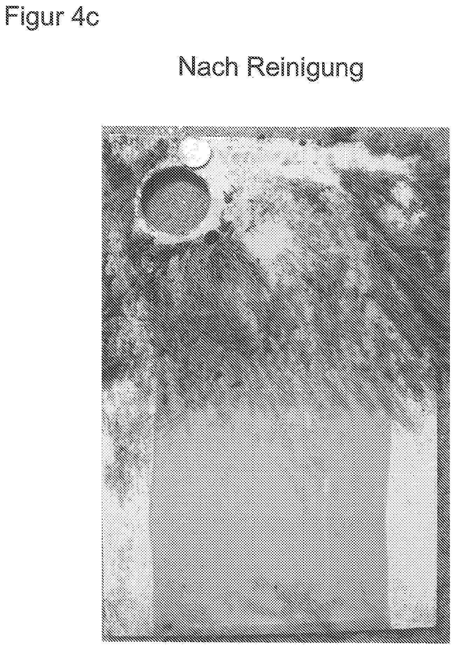

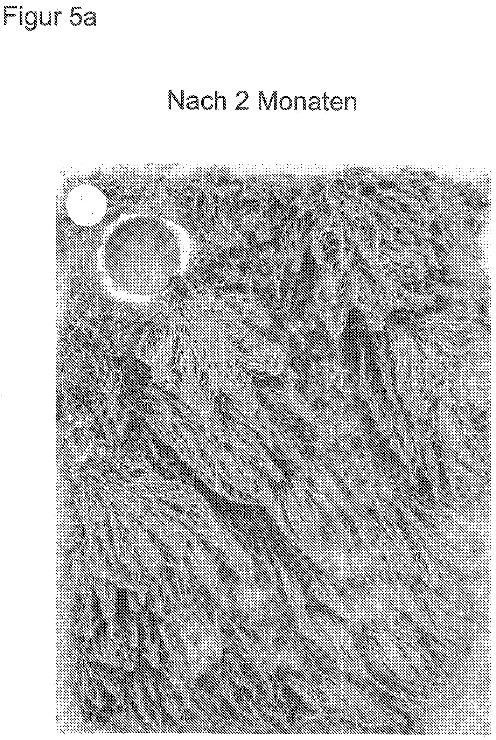

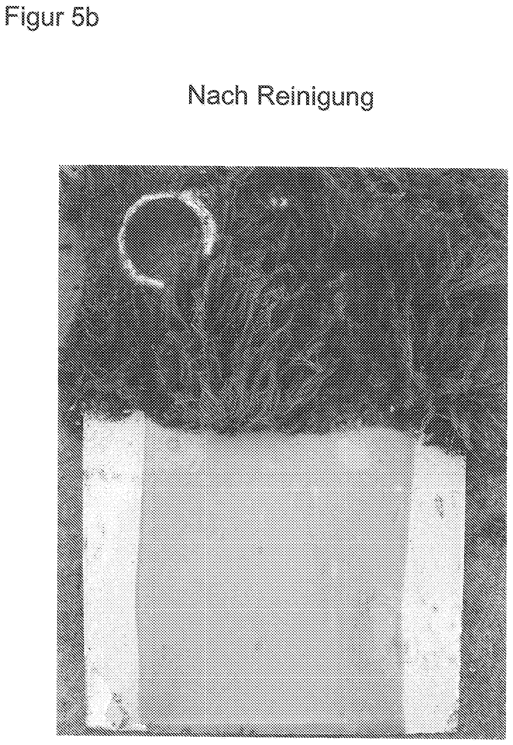

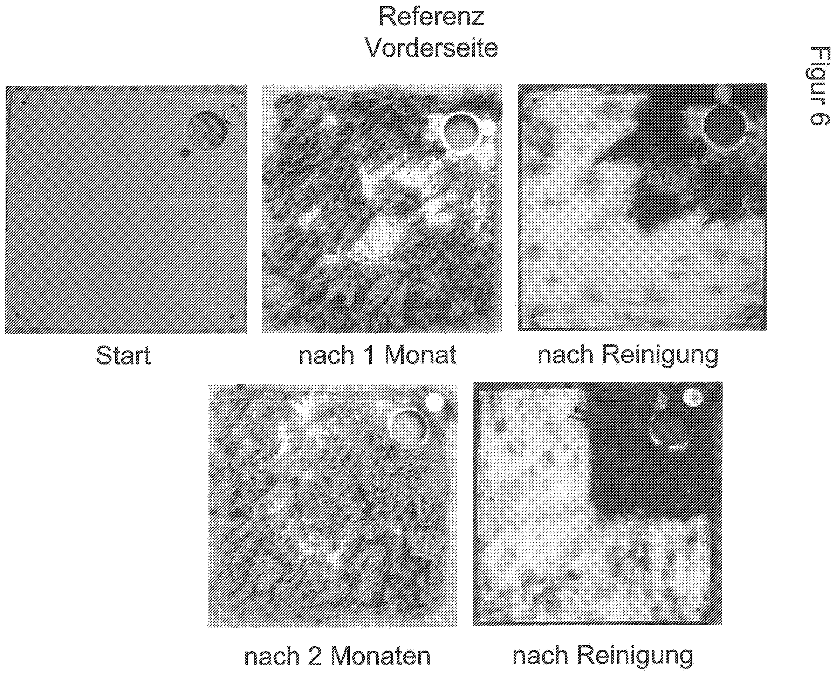

Fazit des Versuchs:
Von der erfindungsgemäßen Beschichtung lässt sich der Bewuchs leicht und vollständig entfernen, von der Referenzbeschichtung nicht (siehe Figuren 4 bis 6).

### Beispiel 16 (Referenzbeispiel)

### Synthesevorschrift einer In Situ Synthese einer PDMS-Gel-Partikel Dispersion

Die disperse Phase (NMP Position 1) und ein geeigneter Emulgator (Position 2) werden in einem 2 Liter Glasreaktor mit möglichst wandgängigem Ankerrührer und Rückflusskühler vorgelegt.
Das Vinyl funktionelle PDMS Präpolymer (Position 3) wird mit einem geeigneten Katalysator (Position 4) gemischt in einen Tropftrichter gefüllt.
Das Hydrid funktionelle PDMS Präpolymer (Position 5) wird in einen weiteren Tropftrichter gefüllt.

Beide Präpolymere werden über ca. 10 min unter intensivem Rühren zugetropft.
(Durch die Wahl des Katalysators kann die notwendige Reaktionstemperatur von Raumtemperatur bis über 100°C variiert werden.)
Es wird für weitere 5 Stunden intensiv gerührt, anschließend für 20 Stunden langsam nachgerührt.

### Beispiel-Rezeptur GP2002:

| **Position** | **Rohstoff** | **Chem. Name** | Molmasse | Funktionalität | Equivalent [%] | **Massen [%]** |
|---|---|---|---|---|---|---|
| 1 | Disperse Phase | N-Methyl-Pyrrolidon | | | | 79,496 |
| *2* | *Emulgator D.C.Fluid 190* | Silicon-Glycolcopolymer | | | | 0,3 |
| | | | | | | |
| **3** | **ABCR: DMS V05** | **Divinyl terminiertes Polydimethyl-siloxane (Präpolymer)** | 800 | 2 | 47,3 | **5,6** |
| **4** | ABCR: SIP 6830.3 | Pt-Katalysator (Raumtemperatur aktiv) | | | | 0,204 |
| ***5*** | ***ABCR: HMS-082*** | ***Methylhydro-siloxane-Dimethylsiloxane-copolymer (Präpolymer)*** | *6000* | *6,49* | 52,7 | ***14,4*** |
| | | | | SUMME: | 100,00 | 100,00 |

Die erhaltene Dipersion vernetzter PDMS Gel Partikel wird in **konventionellen NMP-basierten Polyamidimid Elektroisolierlack eingearbeitet** (z.B. mittels Dispermaten oder Ultra-Turaxx).

Anteil der Dispersion in der "Abmischung":
1 - 75 % (PDMS Gel-Partikel Dispersion); bevorzugt 5 - 20%; besonders bevorzugt ca. 10%

Vorteile dieser Synthese und der erhaltenen PDMS Gelpartikel:
Durch Funktionalität und Molmasse der Präpolymere kann die Maschenweite der vernetzten Gelpartikel kontrolliert werden.

Durch die Verwendung Mono-vinyl-funktioneller Präpolymere können "Dendling Ends" (freie Polymer Enden) eingeführt werden und Gel-Partikel mit PDMS Brush Oberfläche erzeugt werden.
Durch die Verwendung eines Überschusses Di-vinyl-funktioneller Präpolymere können ebenfalls "Dendling Ends" (freie Polymer Enden) eingeführt werden und Gel-Partikel mit PDMS Brush Oberfläche erzeugt werden. Aufgrund der Vernetzung innerhalb der Gelpartikel wird die Migrationsfähigkeit der Siloxane unterbunden.
Durch die In Situ Synthese in NMP kann die erhaltene Dispersion direkt in einen NMP basierten Elektroisolierlack eingearbeitet werden.
Die erhaltene Dipersion vernetzter PDMS Gel Partikel kann als Additiv in einen NMP basierten Elektroisolierlack eingearbeitet werden, aufgrund "fehlender" Polyether Segmente ist die Temperaturstabilität gegenüber konventionellen Gleitadditiven (Polyether-Polydimethylsiloxan-copolymeren) erhöht.

### Beispiel 17 (Referenzbeispiel)

### Applikationsversuche mit PDMS Gel Partikel Dispersionen:

Tabelle 5 zeigt Mischungen aus Elektroisolierlacken und PDMS Gel Partikeln für die Applikationsversuche mit anschließenden Reibungsprüfungen durchgeführt wurden.

Die PDMS Gel Partikel Dispersionen wurden mittels Ultra-Turaxx **in einen konventionellen NMP-basierten Polyamidimid Elektroisolierlack eingearbeitet** sowie in einen modifizierten Lack aus Polyamidimid-Polydimethylsiloxan-block-co-polymeren mit 20%PDMS Anteil.

**Tabelle 5**

| Anteil PDMS Gel Partikel Dispersion GP 2001 | Anteil PDMS Gel Partikel Dispersion GP 2002 | Anteil PDMS Gel Partikel Dispersion GP 2007 | Anteil nicht modifizierter Polyamidimid Lack 595/30 | Anteil modifizierter Polyamidimid Lack PAI LM 28C30C (20%PDMS Anteil) | | Reibungsprüfung Parusell CoF (DIN EN 60851) | Reibungsprüfung Scintilla [N] |
|---|---|---|---|---|---|---|---|
| - | 10% | - | 90% | - | | 0,115 | 5,5 |
| - | 40% | - | 60% | - | | 0,180 | 7,75 |
| - | 75% | - | 25% | - | | 0,195 | 8,0 |
| 40% | - | - | 60% | - | | 0,174 | 8,5 |
| 100% | - | - | - | - | | 0,241 | 7,25 |
| - | 10% | - | - | 90% | | 0,127 | 5,5 |
| - | 40% | - | - | 60% | | 0,139 | 7,5 |
| - | 75% | - | - | 25% | | 0,141 | 7,0 |
| Vergleich: reines PAI | | | 100% | | | 0,230 | 14,0 |

### Prüfung der Gleitfähigkeit

Neben der Prüfung der Wärmebeständigkeiten und elektrischen Eigenschaften wurde die Gleitfähigkeit nach zwei Methoden bestimmt.

### 1. Messung des Oberflächenwiderstands nach Parusell CoF

Bei der Messung des Oberflächenwiderstands nach Parusell CoF wird ein Lackdraht zwischen einer polierten Stahlfläche und einem aufliegendem Stahlschlitten durchgeführt. Gemessen wird die Kraft die auf den Stahlschlitten wirkt. Die Angabe erfolgt als Reibungskoeffizient (dimensionslos). Kleine Werte bedeuten geringere Reibung (Tensiometrie, siehe DIN EN 60851).

### 2. Messung des Reibungswiderstands nach Scintilla

Ein Lackdraht wird mit höherer Geschwindigkeit unter einem Stahlblock mit bestimmter Auflagefläche durchgezogen. Es wird die Kraft gemessen, die durch die Reibung erzeugt wird, Angabe in Newton (N).

## Patentansprüche

1. Lack zum Beschichten von Oberflächen, der ein Polymer enthält, umfassend ein Basispolymer und Modifizierungseinheiten, die nach Aushärtung des Polymers mit dem Basispolymer unverträglich sind, worin die Modifizierungseinheiten kovalent an das Basispolymer gebunden sind und worin die Modifizierungseinheiten Polysiloxane sind, **dadurch gekennzeichnet, dass** Kombinationen oder Mischungen von Polymeren mit mehreren verschiedenen Modifizierungseinheiten, die unterschiedliche Kettenlängen, nämlich eine unterschiedliche Anzahl von Si-Einheiten aufweisen, verwendet werden, dass die Modifizierungseinheiten Polydialkylsiloxane sind, welche 50 bis 200 Si-Einheiten aufweisen und dass der Lack ein erstes Polymer umfassend als Modifizierungseinheiten Polysiloxane mit 60 bis 80 Si-Einheiten und ein zweites Polymer umfassend als Modifizierungseinheiten Polysiloxane mit 120 bis 140 Si-Einheiten, aufweist.

2. Lack nach Anspruch 1, **dadurch gekennzeichnet, dass** nach Aushärtung des Polymers an der Oberfläche des ausgehärteten Lacks separate Bereiche vorliegen.

3. Lack nach einem der vorhergehenden Ansprüche, **dadurch gekennzeichnet, dass** das Basispolymer aus der Gruppe bestehend aus Polyamidimiden, Polyesterimiden, Polyurethanen, Polyestern, Polyamiden, Polyimiden, Polyesteramidimiden, Polyepoxiden, Mischungen oder Kombinationen davon ausgewählt ist oder/und dass das Basispolymer ein Polyamidimid ist.

4. Lack nach einem der vorhergehenden Ansprüche, **dadurch gekennzeichnet, dass** der Anteil der Bausteine mit Modifizierungseinheiten 2 - 70 Massen-% bezogen auf das gesamte Polymer beträgt.

5. Ausgehärteter Lack erhältlich durch thermisches Aushärten eines Lacks nach einem der Ansprüche 1 bis 4, wobei an der Oberfläche des ausgehärteten Lacks separate Bereiche vorliegen.

6. Verfahren zur Herstellung eines Lacks nach einem der Ansprüche 1 bis 4, **dadurch gekennzeichnet, dass** ein erster modifizierter Baustein, z. B. ein Monomer oder ein Präpolymer, mit mindestens einer Modifizierungseinheit mit mindestens einem zweiten Monomer polymerisiert wird, um ein Polymer mit Modifizierungseinheiten zu erhalten, das zusammen mit einem Lösungsmittel und gegebenenfalls Additiven zu einem Lack formuliert wird.

7. Verfahren nach Anspruch 6, **dadurch gekennzeichnet, dass** ein Diisocyanat mit einem Polysiloxan mit reaktionsfähigen Gruppen umgesetzt wird und das Reaktionsprodukt anschließend mit einem Säureanhydrid polymerisiert wird.

8. Verfahren zur Herstellung einer beschichteten Oberfläche, wobei ein erster modifizierter Baustein, z. B. ein Monomer oder ein Präpolymer, mit mindestens einer Modifizierungseinheit mit mindestens einem zweiten Monomer polymerisiert wird, um ein Polymer mit kovalent gebundenen Modifizierungseinheiten zu erhalten, das zusammen mit einem Lösungsmittel und gegebenenfalls Additiven zu einem Lack formuliert wird, und der Lack auf eine Oberfläche aufgebracht wird, und wobei der Lack einem Einbrennprozess unterzogen wird, wobei an der Oberfläche des ausgehärteten Lacks separate Bereiche vorliegen und worin die Modifizierungseinheiten Polysiloxane sind, **dadurch gekennzeichnet, dass** Kombinationen oder Mischungen von Polymeren mit mehreren verschiedenen Modifizierungseinheiten, die unterschiedliche Kettenlängen, nämlich eine unterschiedliche Anzahl von Si-Einheiten aufweisen, verwendet werden, dass die Modifizierungseinheiten Polydialkylsiloxane sind, welche 50 bis 200 Si-Einheiten aufweisen und dass ein erstes Polymer umfassend als Modifizierungseinheiten Polysiloxane mit 60 bis 80 Si-Einheiten und ein zweites Polymer umfassend als Modifizierungseinheiten Polysiloxane mit 120 bis 140 Si-Einheiten, eingesetzt wird.

9. Verwendung des Lacks nach einem der Ansprüche 1 bis 4 als Anti-Haft-und/oder Anti-Fouling-Beschichtung von Oberflächen, insbesondere einer metallischen oder nichtmetallischen Oberfläche.

10. Verwendung nach Anspruch 9 als Beschichtung in Gleitlagern oder/und für Umlenkrollen für Gurte und Seile.

11. Verwendung nach einem der Ansprüche 9 oder 10, **dadurch gekennzeichnet, dass** der Lack als äußere Schicht oder Schichten auf eine Oberfläche aufgetragen wird, die mit einer oder mehreren Lackschichten überzogen ist.

12. Verwendung nach Anspruch 9 als Anti-Fouling-Beschichtung oder/und Fouling-Release-Beschichtung auf einem Schiffsrumpf.

13. Verwendung des Lacks nach einem der Ansprüche 1 bis 4 als Elektroisolierlack zum Auftragen auf einen Draht.

14. Verwendung eines Polymers als Bestandteil eines Lacks, umfassend ein Basispolymer und Modifizierungseinheiten, die nach Aushärtung des Polymers mit dem Basispolymer unverträglich sind, worin die Modifizierungseinheiten kovalent an das Basispolymer gebunden sind und worin die Modifizierungseinheiten Polysiloxane sind, **dadurch gekennzeichnet, dass** Kombinationen oder Mischungen von Polymeren mit mehreren verschiedenen Modifizierungseinheiten, die unterschiedliche Kettenlängen nämlich eine unterschiedliche Anzahl von Si-Einheiten aufweisen, verwendet werden, dass die Modifizierungseinheiten Polydialkylsiloxane sind, welche 50 bis 200 Si-Einheiten aufweisen und dass ein erstes Polymer umfassend als Modifizierungseinheiten Polysiloxane mit 60 bis 80 Si-Einheiten und ein zweites Polymer umfassend als Modifizierungseinheiten Polysiloxane mit 120 bis 140 Si-Einheiten, eingesetzt wird.

## Claims

1. An enamel for coating surfaces which contains a polymer comprising a base polymer and modifying moieties that are incompatible with the base polymer after the polymer is cured, wherein the modifying moieties are bonded covalently with the base polymer and wherein the modifying moieties are polysiloxanes, **characterized in that** combinations or mixtures of polymers with multiple different modifying moieties having different chain lengths, in particular a different number of Si units, are used, that the modifying moieties are polydialkylsiloxanes having 50 to 200 Si units, and that the enamel includes a first polymer which comprises polysiloxanes having 60 to 80 Si units as modifying moieties and a second polymer which comprises polysiloxanes having 120 to 140 Si units as modifying moieties.

2. The enamel according to claim 1, **characterized in that** after the polymer is cured separate areas are present on the surface of the cured enamel.

3. The enamel according to any one of the preceding claims, **characterized in that** the base polymer is selected from the group consisting of polyamide imides, polyester imides, polyurethanes, polyesters, polyamides, polyimides, polyester amide imides, polyepoxides, mixtures or combinations thereof, and/or the base polymer is a polyamide imide.

4. The enamel according to any one of the preceding claims, **characterized in that** the blocks containing modifying moieties constitute 2 - 70 % by mass relative to the total polymer.

5. A cured coating obtainable by thermal curing of an enamel according to any one of claims 1 to 4, being present on the surface of the cured coating separate areas.

6. A method for preparing an enamel according to any one of claims 1 to 4, **characterized in that** a first modified block, for example a monomer or a prepolymer with at least one modifying moiety is polymerized with at least one second monomer to obtain a polymer with modifying moieties which is formulated together with a solvent and optionally additives to produce an enamel.

7. The method according to claim 6, **characterized in that** a diisocyanate is reacted with a polysiloxane containing reactive groups and the reaction product is then polymerized with an acid anhydride.

8. A method for preparing a coated surface, wherein a first modified block, for example a monomer or a prepolymer with at least one modifying moiety is polymerized with at least one second monomer to obtain a polymer having covalently bonded modifying moieties, which together with a solvent and optionally additives is formulated to produce an enamel, and the enamel is applied to a surface, and wherein the enamel is subjected to a baking process, wherein separate areas are present on the surface of the cured enamel and in which the modifying moieties are polysiloxanes, **characterized in that** combinations or mixtures of polymers with multiple different modifying moieties having different chain lengths, in particular a different number of Si units, are used, that the modifying moieties are polydialkylsiloxanes having 50 to 200 Si units, and that a first polymer which comprises polysiloxanes having 60 to 80 Si units as modifying moieties and a second polymer which comprises polysiloxanes having 120 to 140 Si units as modifying moieties are used.

9. Use of the enamel according to any one of claims 1 to 4 as anti-adhesive and/or anti-fouling coating for surfaces, particularly a metallic or non-metallic surface.

10. The use according to claim 9 as a coating in plain bearings and/or for deflecting rollers for belts and cables.

11. The use according to either of claims 9 or 10, **characterized in that** the enamel is applied as the outer layer or layers to a surface which is coated with one or more enamel layers.

12. The use according to claim 9 as an anti-fouling coating and/or fouling release coating on a ship's hull.

13. The use of the enamel according to any one of claims 1 to 4 as an electrically insulating enamel for application to a wire.

14. Use of a polymer as a component of an enamel comprising a base polymer and modifying moieties which are incompatible with the base polymer after curing the polymer is cured, in which the modifying moieties are bonded covalently with the base polymer and wherein the modifying moieties are polysiloxanes, **characterized in that** combinations or mixtures of polymers with multiple different modifying moieties having different chain lengths, in particular a different number of Si units, are used, that the modifying moieties are polydialkylsiloxanes having 50 to 200 Si units, and that a first polymer which comprises polysiloxanes having 60 to 80 Si units as modifying moieties and a second polymer which comprises polysiloxanes having 120 to 140 Si units as modifying moieties are used.

## Revendications

1. Vernis, destiné à revêtir des surfaces, lequel contient un polymère, comprenant un polymère de base et des unités modificatrices, qui après durcissement du polymère sont incompatibles avec le polymère de base, dans lequel les unités modificatrices sont liées par covalence au polymère de base et dans lequel les unités modificatrices sont des polysiloxanes, **caractérisé en ce que** des combinaisons ou des mélanges de polymères avec plusieurs unités modificatrices différentes, qui présentent des longueurs de chaînes différentes, à savoir un nombre différent d'unités Si sont utilisé(e)s, **en ce que** les unités modificatrices sont des polydialkylsiloxanes, lesquels comportent de 50 à 200 unités Si et **en ce que** le vernis comporte un premier polymère comprenant en tant qu'unités modificatrices des polysiloxanes avec de 60 à 80 unités Si et un deuxième polymère comprenant en tant qu'unités modificatrices des polysiloxanes avec de 120 à 140 unités Si.

2. Vernis selon la revendication 1, **caractérisé en ce qu'**après durcissement du polymère, des zones séparées sont présentes sur la surface du vernis durci.

3. Vernis selon l'une quelconque des revendications précédentes, **caractérisé en ce que** le polymère de base est choisi dans le groupe comprenant les polyamide-imides, les polyester-imides, les polyuréthanes, les polyesters, les polyamides, les polyimides, les polyesteramide-imides, les poly-époxydes, des mélanges ou des combinaisons de ces derniers et/ou **en ce que** le polymère de base est un polyamide-imide.

4. Vernis selon l'une quelconque des revendications précédentes, **caractérisé en ce que** la part des composants avec unités modificatrices s'élève à de 2 à 70 % en masse, rapportés au polymère total.

5. Vernis durci, susceptible d'être obtenu par durcissement thermique d'un vernis selon l'une quelconque des revendications 1 à 4, des zones séparées étant présentes sur la surface du vernis durci.

6. Procédé, destiné à produire un vernis selon l'une quelconque des revendications 1 à 4, **caractérisé en ce qu'**on polymérise un premier composant modifié, par exemple un monomère ou un prépolymère, à l'aide d'au moins une unité modificatrice avec au moins un deuxième monomère, pour obtenir un polymère avec des unités modificatrices, que l'on formule en un vernis, en commun avec un solvant et le cas échéant des additifs.

7. Procédé selon la revendication 6, **caractérisé en ce qu'**on met en réaction un di-isocyanate avec un polysiloxane avec des groupes réactifs et on polymérise ensuite le produit de réaction avec un einem anhydride d'acide.

8. Procédé, destiné à produire une surface revêtue, lors duquel on polymérise un premier composant modifié, par exemple un monomère ou un prépolymère comportant au moins une unité modificatrice avec au moins un deuxième monomère, pour obtenir un polymère avec des unités modificatrices liées par covalence, que l'on formule en un vernis en commun avec un solvant et le cas échéant des additifs et on applique le vernis sur une surface, et on soumet le vernis à un processus de cuisson, des zones séparées étant présentes sur la surface du vernis durci et dans lequel les unités modificatrices sont des polysiloxanes, **caractérisé en ce qu'**on utilise des combinaisons ou des mélanges de polymères comportant différentes unités modificatrices, qui présentent différentes longueurs de chaînes, à savoir un nombre différent d'unités Si, **en ce que** les unités modificatrices sont des polydialkylsiloxanes, lesquels comportent de 50 à 200 unités Si et **en ce qu'**on met en oeuvre un premier polymère comprenant en tant qu'unités modificatrices des polysiloxanes avec de 60 à 80 unités Si et un deuxième polymère comprenant en tant qu'unités modificatrices des polysiloxanes avec de 120 à 140 unités Si.

9. Utilisation du vernis selon l'une quelconque des revendications 1 à 4 comme revêtement anti-adhérence et/ou anti-encrassement de surfaces, notamment d'une surface métallique ou non métallique.

10. Utilisation selon la revendication 9 comme revêtement dans des paliers lisses et/ou pour des galets de renvoi destinés à des sangles et des filins.

11. Utilisation selon l'une quelconque des revendications 9 ou 10, **caractérisé en ce qu'**on applique le vernis en tant que couche ou couches extérieures sur une surface qui est recouverte d'une ou de plusieurs couches de vernir.

12. Utilisation selon la revendication 9 comme revêtement anti-encrassement et/ou comme revêtement de décrassement sur une coque de bateau.

13. Utilisation du vernis selon l'une quelconque des revendications 1 à 4 comme vernis isolant électrique, destiné à être appliqué sur un fil métallique.

14. Utilisation d'un polymère comme élément constitutif d'un vernis, comprenant un polymère de base et des unités modificatrices, qui après durcissement du polymère sont incompatibles avec le polymère de base, dans lequel les unités modificatrices sont liées par covalence au polymère de base et dans lequel les unités modificatrices sont des polysiloxanes, **caractérisé en ce qu'**on utilise des combinaisons ou des mélanges de polymères avec plusieurs unités modificatrices différentes, qui présentent différentes longueurs de chaînes, à savoir un nombre différent d'unités Si, **en ce que** les unités modificatrices sont des polydialkylsiloxanes, lesquels comportent de 50 à 200 unités Si et **en ce qu'**on met en oeuvre un premier polymère comprenant en tant qu'unités modificatrices des polysiloxanes avec de 60 à 80 unités Si et un deuxième polymère comprenant en tant qu'unités modificatrices des polysiloxanes avec de 120 à 140 unités Si.
